(19) **Europäisches Patentamt / European Patent Office / Office européen des brevets**

(11) **EP 4 657 766 A1**

(12) **EUROPEAN PATENT APPLICATION**
published in accordance with Art. 153(4) EPC

(43) Date of publication:
03.12.2025 Bulletin 2025/49

(21) Application number: 23920881.2

(22) Date of filing: 11.12.2023

(51) International Patent Classification (IPC):
*H04B 7/06* (2006.01)

(52) Cooperative Patent Classification (CPC):
H04B 7/06; H04B 17/309

(86) International application number:
PCT/CN2023/137909

(87) International publication number:
WO 2024/164692 (15.08.2024 Gazette 2024/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.02.2023 CN 202310136369

(71) Applicant: ZTE Corporation
Shenzhen, Guangdong 518057 (CN)

(72) Inventors:
• YU, Hongkang
  Shenzhen, Guangdong 518057 (CN)

• CHEN, Yijian
  Shenzhen, Guangdong 518057 (CN)
• JIAN, Mengnan
  Shenzhen, Guangdong 518057 (CN)
• ZHANG, Shujuan
  Shenzhen, Guangdong 518057 (CN)
• YANG, Jun
  Shenzhen, Guangdong 518057 (CN)
• SI, Yuan
  Shenzhen, Guangdong 518057 (CN)

(74) Representative: Deambrogi, Edgardo et al
Jacobacci & Partners S.p.A.
Corso Emilia 8
10152 Torino (IT)

(54) **CHANNEL INFORMATION FEEDBACK METHOD, CHANNEL INFORMATION ACQUISITION METHOD, AND STORAGE MEDIUM**

(57) Embodiments of the present disclosure provide a channel information feedback method, a channel information acquisition method, a computer-readable storage medium, and a computer program product. A terminal generates codewords according to a preset codeword generation model, determines a target codeword and a corresponding codeword generation parameters by measuring a pilot signal, and feeds back the target codeword and the corresponding codeword generation parameters to an access node; and the access node acquires channel information according to the received codeword generation parameters and the preset codeword generation model.

Perform channel measurement to obtain channel information — S100

Generate a codeword according to a preset codeword generation model — S200

Obtain a target codeword according to the channel information and the codeword — S300

Determine codeword generation parameters corresponding to the target codeword, and feed back the codeword generation parameters — S400

Fig. 1

## Description

### Cross-Reference to Related Application

The present disclosure is based on and claims priority to Chinese Patent Application No. CN2023101363694, filed on February 9, 2023, the entire disclosure of which is incorporated herein by reference.

### Technical Field

Embodiments of the present disclosure relate to the field of communication technology, and in particular, to a channel information feedback method, a channel information acquisition method, a computer-readable storage medium, and a computer program product.

### Background

Massive Multi-input Multi-output (MIMO) systems are key technologies for enhancing the capacity of next-generation mobile communication networks. Accurate channel state information feedback plays a crucial role in the performance of MIMO systems.

In the related art, a channel information feedback method is based on an assumption that a User Equipment (UE) is located in a far field of an antenna array, that is, for a Uniform Planar Array (UPA), a channel information matrix fed back may be represented in the form of a Kronecker product of channel vectors in a horizontal dimension and a vertical dimension. However, as the scale of antenna arrays increases, the UE in many scenarios will operate within the near-field region of the antenna array. The characteristics of the channel in the near-field differ from those in the far-field, and existing feedback models are unable to accurately reflect near-field channel information, which causes degradation of transmission performance. Therefore, how to accurately perform channel information feedback and acquisition is a problem to be solved urgently.

### Summary

Provided are a channel information feedback method, a channel information acquisition method, a computer-readable storage medium and a computer program product, which aim at accurately feeding back channel information and improving the transmission performance of a communication system.

According to a first aspect, an embodiment of the present disclosure provides a channel information feedback method, applied to a terminal, comprising: performing channel measurement to obtain channel information; generating a codeword according to a preset codeword generation model; obtaining a target codeword according to the channel information and the codeword; and determining codeword generation parameters corresponding to the target codeword and feeding back the codeword generation parameters to an access node, the codeword being used to represent channel information.

According to a second aspect, an embodiment of the present disclosure provides a channel information acquisition method, applied to an access node and comprising: generating a codeword according to a preset codeword generation model; receiving codeword generation parameters fed back by a terminal; and acquiring channel information according to the codeword generation parameters and the codeword.

According to a third aspect, an embodiment of the present disclosure provides a terminal, comprising: at least one processor; at least one memory for storing at least one program; the channel information feedback method according to the first aspect is implemented when the at least one program is executed by the at least one processor.

According to a fourth aspect, an embodiment of the present disclosure provides an access node, comprising: at least one processor; at least one memory for storing at least one program; the channel information acquisition method according to the second aspect is implemented when the at least one program is executed by the at least one processor.

According to a fifth aspect, an embodiment of the present disclosure provides a computer-readable storage medium, the computer-readable storage medium stores a program executable by a processor, wherein when being executed by a processor, the program executable by the processor is used for implementing the channel information feedback method according to the first aspect or the channel information acquisition method according to the second aspect.

According to a sixth aspect, an embodiment of the present disclosure provides a computer program product, comprising a computer program or computer instructions, wherein the computer program or the computer instructions are stored in a computer-readable storage medium; a processor of a computer device reads the computer program or the computer instructions from the computer-readable storage medium; the processor executes the computer program or the computer instructions, so that the computer device executes the channel information feedback method according to the first aspect, or the channel information acquisition method according to the second aspect.

**Brief Description of the Drawings**

Fig. 1 is a flowchart of a channel information feedback method applied to a terminal according to an embodiment of the present disclosure.
Fig. 2 is a flowchart of a channel information acquisition method applied to a base station according to an embodiment of the present disclosure.
Fig. 3 is a flowchart of a channel information acquisition method applied to a base station according to an embodiment of the present disclosure.
Fig. 4 is a schematic diagram of feedback and acquisition of channel information between a terminal and a base station according to an example of the present disclosure.
Fig. 5 is a schematic diagram of feedback and acquisition of channel information between a terminal and a base station according to an example of the present disclosure.
Fig. 6 is a schematic diagram of feedback and acquisition of channel information between a terminal and a base station according to an example of the present disclosure.
Fig. 7 is a schematic diagram of feedback and acquisition of channel information between a terminal and a base station according to an example of the present disclosure.
Fig. 8 is a schematic structural diagram of a terminal according to an embodiment of the present disclosure.
Fig. 9 is a schematic structural diagram of a terminal according to an embodiment of the present disclosure.

**Detailed Description of the Embodiments**

To make the objectives, technical solutions, and advantages of the present disclosure clearer, the present disclosure is further described in detail below in combination with the drawings and embodiments. It should be understood that the specific embodiments described herein are only used to explain the present disclosure, and are not intended to limit the present disclosure.

It should be noted that, although functional modules have been divided in the schematic diagrams of devices and logical order have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

In the embodiments of the present disclosure, the words such as "further", "exemplarily", or "optionally" are used to describe cases, instances, or explanations and should not be interpreted as being more preferred or advantageous than other embodiments or design solutions. The usage of words such as "further", "exemplarily", or "optionally", is intended to present relevant concepts in a specific way.

In a wireless communication system, a sending end and a receiving end are usually respectively configured with a plurality of antennas to form an MIMO system, and the transmission rate is improved by using a space division multiplexing technology that simultaneously supports transmission of multi-layer data streams. However, when multiple antennas transmit a data stream, there is interference between the antennas; and the space division multiplex of multiple data on the same time-frequency resource block in the form of space division multiple access (SDMA) introduces co-channel interference (CCI), which increases a bit error rate and affects communication reliability. In order to ensure performance, the sending end needs to rely on channel information fed back by the receiving end to perform precoding. In the precoding technology, interference suffered by a sending signal through a wireless channel is pre-eliminated by pre-processing the signal, specifically, by means of a precoding matrix, the transmitted signal is located on the corresponding orthogonal basis of the channel matrix, thereby enabling the transmission of different data streams over multiple independent spatial channels. Generally, for a single-user MIMO system, the sending end needs to acquire characteristic vector information of a channel matrix, and in a multi-user MIMO system, the sending end needs more accurate channel information.

In standard specifications of existing wireless communication systems, such as the 4th generation (4G) long term evolution (LTE) and the 5th generation (5G) new radio (NR), the acquisition of channel information is mainly based on codebook feedback, and the accuracy of acquiring the channel information greatly depends on the design of the codebook. The basic principle is briefly introduced as follows: taking single-stream transmission as an example, assuming that the capacity of a feedback channel is B bps/Hz, the number of available codewords is $G=2^B$, and the sending end and the receiving end jointly store a codebook $C = \{c_1, c_2, ..., c_G\}$. The receiving end obtains a channel matrix by measuring a pilot signal, selects, from above codebook C, a codeword $c_g$ best matching the channel according to a certain rule, and feeds back a codeword sequence number g to the transmitting end. The codeword serial number g is also referred to as a Precoding Matrix Indicator (PMI). The transmitting end obtains the codeword $c_g$ according to the codeword serial number g, so as to obtain channel information.

The characteristics of channel information are determined by the properties of electromagnetic waves. The phase difference in the channel information is determined by the wave path difference of the electromagnetic waves arriving at each unit of the antenna array. In the existing 5G NR system, it is assumed that the UE is located in the far field of the antenna array. In this case, the electromagnetic waves arriving at the receiving end from a specific direction can be regarded as plane waves. The phase of the antenna elements has a linear relationship with the antenna index. For the commonly deployed UPA in existing systems, the phase difference between different antenna elements is determined by the distance differences in both the horizontal and vertical dimensions. The influences of these two dimensions are independent of each other. Therefore, the codebook designed for the UPA can be represented as the Kronecker product of two channel vectors that reflect the phase relationships in the horizontal and vertical dimensions. For example, in the 3rd Generation Partnership Project (3GPP) 38.214 protocol, considering scenarios with 4, 8, 12, 16, 24, and 32 antenna ports, the codebook designed for the UPA takes the following form:

$$u_m = [1, e^{j\frac{2\pi m}{O_2 N_2}}, \ldots, e^{j\frac{2\pi m(N_2-1)}{O_2 N_2}}],$$

$$v_{l,m} = [u_m, e^{j\frac{2\pi l}{O_1 N_1}} u_m, \ldots, e^{j\frac{2\pi l(N_1-1)}{O_1 N_1}} u_m]^T$$

wherein, $v_{l,m}$ constitutes the information finally fed back and may be simply represented as $v_{l,m} = (\tilde{u}_l \otimes u_m)^T$, $\otimes$ representing a Kronecker product, and $\tilde{u}_l = [1, e^{j\frac{2\pi l}{O_1 N_1}}, \ldots, e^{j\frac{2\pi l(N_1-1)}{O_1 N_1}}]$.

Massive MIMO is a core technology of a 5G communication system, and the significant feature of the Massive MIMO is that a large number of antennas are configured at a base station, wherein the antennas in the embodiments of the present disclosure are generally understood as defined antenna ports. In combination with the multi-user MIMO technique, a base station may multiplex multiple users on the same time-frequency resource. Generally, the ratio of the number of antennas to the number of multiplexed users is maintained at around 5 to 10 times. To multiplex more users and further enhance spectral efficiency, ultra-massive MIMO will be applied in the next-generation wireless communication systems. However, as the scale of the antenna array further increases, the probability of UEs appearing in the near-field region significantly rises. According to the classical theory, fields surrounding the antenna can be divided into two main regions: a region near the antenna is referred to as a near field or a Fresnel region, and a region far away from the antenna is referred to as a far field or a Fraunhofer region, and the near field range can be expressed as:

$$r < \frac{2D^2}{\lambda},$$

wherein, D represents the maximum size of the antenna array, and $\lambda$ represents the wavelength. Taking an ultra-large scale antenna array of 100* 100 as an example, assuming that the operating frequency is 30 GHz, the region of $r$<100m may be regarded as a near field. With regard to scenarios where the UE is located in a near field, an electromagnetic wave arriving at an antenna array cannot be taken as a plane wave any longer, and a phase and an antenna index no longer have a linear relationship. Designing a UPA codebook using the described Kronecker product will result in insufficient accuracy of feedback channel information, thereby affecting system performance.

Based on this, the present disclosure provides a channel information feedback method, a channel information acquisition method, a computer-readable storage medium, and a computer program product. The transmitting end and the receiving end perform channel information feedback and acquisition using a novel codeword generation model for a UPA, wherein the model considers scenarios where the UE is located in a near field, thereby achieving more accurate channel information feedback. It should be noted that the UE is one type of terminal, and the embodiments of the present disclosure are described by taking the UE as an example. However, those skilled in the art are aware that other types of terminals may also implement the solutions provided in the embodiments of the present disclosure.

The channel information feedback method and the channel information acquisition method according to the embodiments of the present disclosure can be applied to various communication systems, for example, a global system of mobile communication (GSM) system, a code division multiple access (CDMA) system, and a wideband code division multiple access (WCDMA) system, a general packet radio service (GPRS), an LTE system, an advanced long term evolution (LIE-A) system, 5G, Beyond Fifth Generation (B5G), 6th Generation (6G) systems, etc.

In the embodiment of the present disclosure, the terminal may be a mobile phone, a pad, a computer with a wireless transceiving function, a virtual reality (VR) terminal, an augmented reality (AR) terminal, an internet of things (IoT) terminal device, a wireless terminal in industrial control, a wireless terminal in self driving, a wireless terminal in remote medical, a wireless terminal in smart grid, a wireless terminal in transport safety, a wireless terminal in smart city, a wireless terminal in smart home, a user equipment (UE), a vehicle-mounted communication apparatus, a vehicle-mounted communication chip, a communication apparatus in a roadside unit or a roadside unit, etc. It can also be wearable devices or smart wearable devices, such as bracelets, glasses, gloves, watches, ornaments, and other portable devices integrated into the user's clothing or accessories.

In the embodiment of the present disclosure, the access node may be a global system for mobile communications or a base transceiver station (BTS) in code division multiple access, may also be a NodeB (NB) in a wideband code division multiple access system, may also be an evolved NodeB (eNB or eNodeB) in an LTE system, may also be a wireless controller in a cloud radio access network (CRAN) scenario, or the network device may be a relay station, an access point, a vehicle-mounted device, a wearable device, a network device in a future 5G network, or a network device in a future evolved public land mobile network (PLMN) network, for example, a transmission and reception point (TRP) or a transmission point (TP) in an NR system, a base station (gNB) in an NR system, one or a group (comprising a plurality of antenna panels) of base stations in a 5G system, etc. The embodiment of the present disclosure is not particularly limited thereto.

To expound the technical solution in detail, a base station communicating with a terminal in a communication system is taken as an example to further illustrate channel information feedback and channel information acquisition in the embodiments of the present disclosure.

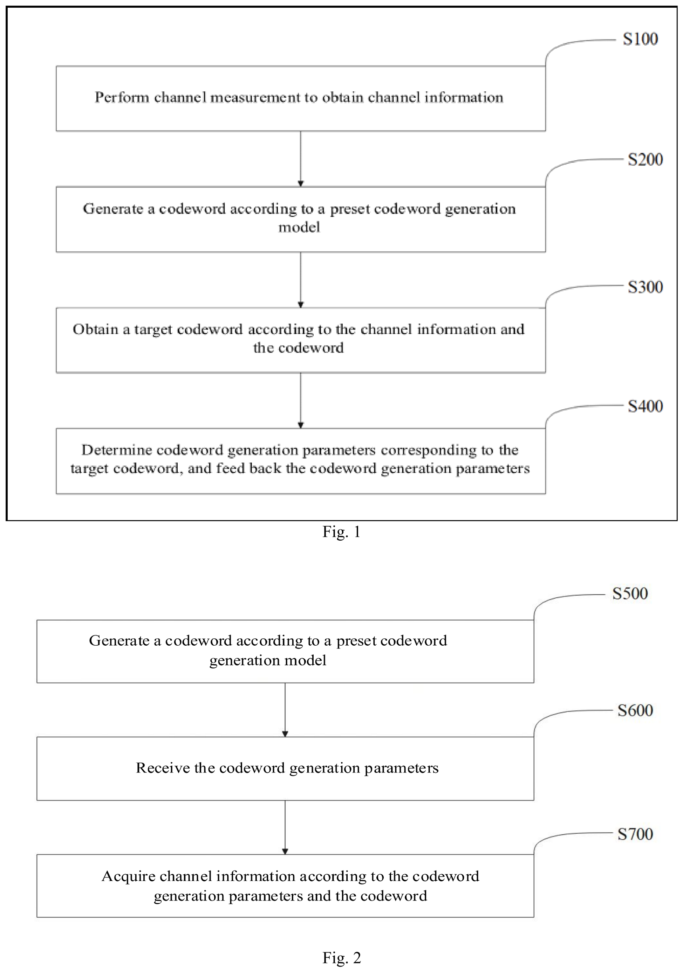

Fig. 1 is a flowchart of a channel information feedback method applied to a terminal according to an embodiment of the present disclosure. As shown in the figure, the channel information feedback method includes but is not limited to S100, S200, S300 and S400. It should be noted that the embodiments of the present disclosure do not strictly limit the following steps. For example, in S100, the terminal performing channel measurement to obtain channel information may occur after S200, where the terminal generates a codeword on the basis of a preset codeword generation model.

S100: a terminal performs channel measurement to obtain channel information.

In an embodiment, a terminal receives a pilot signal sent by a base station, and obtains channel information by measuring the pilot signal, wherein the channel information includes, but is not limited to, a channel matrix.

S200: the terminal generates a codeword according to a preset codeword generation model.

In an embodiment, there is at least one codeword in the codeword generation model, and the calculation formula of the codeword generation model is $pe^{-j\pi(\beta_1 n_x + \beta_2 n_y + \beta_3 n_x 2 + \beta_4 n_y 2 + \beta_5 n_x n_y)}$, where p is a scalar, and may be agreed in advance by a base station and a terminal, or determined according to codeword generation parameters fed back by the terminal $n_x \in \{0, 1, ..., N_x - 1\}$, $n_y \in \{0, 1, ..., N_y - 1\}$; $N_x$ and $N_y$ are dimension information parameters used for codeword generation, $N_x$ and $N_y$ are determined according to the number of antenna ports in different dimensions of a uniform antenna array, and are integers configured by a base station to a terminal; $\beta_1$, $\beta_2$, $\beta_3$, $\beta_4$ and $\beta_5$ are model coefficients, the model coefficients are real numbers, are determined according to the codeword generation parameters $t_1$, $t_2$ and $t_3$ fed back by the terminal, and have a preset mapping relationship with the codeword generation parameters.

In an embodiment, $\beta_3$, $\beta_4$ and $\beta_5$ are not 0 simultaneously. It can be understood that when the UE is in the near field, the phase increases nonlinearly and cannot be approximated as an electromagnetic wave incident on or emitted from the antenna array in the form of a plane wave. When $\beta_1$, $\beta_2$ and $\beta_3$ are not 0 simultaneously, the phase in the model adopts a quadratic bivariate polynomial, which can more accurately reflect the electromagnetic wave incident on or emitted from the antenna array in the form of a spherical wave approximation.

In an embodiment, $\beta_3$, $\beta_4$ and $\beta_5$ may be 0 simultaneously for some of the generated codewords, and these codewords may still be regarded as conforming to the codeword generation model. It can be understood that, when the UE is located at a far field, an electromagnetic wave may be approximated to be incident on to or emergent from an antenna array in the form of a plane wave, $\beta_3$, $\beta_4$ and $\beta_5$ may be approximated to be 0, and phases form an arithmetic progression, and increase linearly.

In an embodiment, the preset mapping relationship between the model coefficient $\beta_i$ and the codeword generation parameters $t_j$ is:

$$\beta_1 = f_1(t_1),$$

$$\beta_2 = f_2(t_2),$$

$$\beta_3 = f_3(t_1, t_3),$$

$$\beta_4 = f_4(t_2, t_3),$$

$$\beta_5 = f_5(t_1, t_2, t_3)$$

wherein $t_1$, $t_2$ and $t_3$ are codeword generation parameters, and all model coefficients $\beta_1$, $\beta_2$, $\beta_3$, $\beta_4$ and $\beta_5$ in the codeword generation model can be represented as a function $f_i$ of the codeword generation parameters $t_1$, $t_2$ and $t_3$, wherein $f_i$ is a function agreed in advance between a base station and a terminal.

In an embodiment, the preset mapping relationship between the model coefficient $\beta_i$ and the codeword generation parameters $t_j$ is:

$$\beta_1 = q_1 t_1,$$

$$\beta_2 = q_2 t_2,$$

$$\beta_3 = q_3(1 - t_1{}^2)t_3,$$

$$\beta_4 = q_4(1 - t_2{}^2)t_3,$$

$$\beta_5 = q_5 t_1 t_2 t_3$$

wherein $q_i$ is a real number agreed in advance between the base station and the terminal.

In another embodiment, the preset mapping relationship between the model coefficient $\beta_i$ and the codeword generation parameters $t_j$ is:

$$\beta_1 = q_1 t_1,$$

$$\beta_2 = q_2 t_2,$$

$$\beta_3 = \frac{q_3(1 - t_1{}^2)}{t_3},$$

$$\beta_4 = \frac{q_4(1 - t_2{}^2)}{t_3},$$

$$\beta_5 = \frac{q_5 t_1 t_2}{t_3}$$

wherein $q_i$ is a real number agreed in advance between the base station and the terminal.

In an embodiment, the preset mapping relationship between the model coefficient $\beta_i$ and the codeword generation parameters $t_j$ is:

$$\beta_1 = f_1(t_1, t_2),$$

$$\beta_2 = f_2(t_1, t_2),$$

$$\beta_3 = f_3(t_1, t_2, t_3),$$

$$\beta_4 = f_4(t_1, t_2, t_3),$$

$$\beta_5 = f_5(t_1, t_2, t_3)$$

wherein $t_1$, $t_2$ and $t_3$ are codeword generation parameters, and all model coefficients $\beta_1$, $\beta_2$, $\beta_3$, $\beta_4$ and $\beta_5$ in the codeword generation model can be represented as a function $f_i$ of the codeword generation parameters $t_1$, $t_2$ and $t_3$, wherein $f_i$ is a function agreed in advance between a base station and a terminal.

In an embodiment, the preset mapping relationship between the model coefficient $\beta_i$ and the codeword generation parameters $t_j$ is:

$$\beta_1 = q_1 \sin t_1 \cos t_2,$$

$$\beta_2 = q_2 \sin t_1 \sin t_2,$$

$$\beta_3 = q_3(1 - \sin^2 t_1 \cos^2 t_2)t_3,$$

$$\beta_4 = q_4(1 - \sin^2 t_1 \sin^2 t_2)t_3,$$

$$\beta_5 = q_5(\sin^2 t_1 \sin t_2 \cos t_2)t_3$$

wherein $q_i$ is a real number agreed in advance between the base station and the terminal.

In an embodiment, the preset mapping relationship between the model coefficient $\beta_i$ and the codeword generation parameters $t_j$ is:

$$\beta_1 = q_1 \sin t_1 \cos t_2,$$

$$\beta_2 = q_2 \sin t_1 \sin t_2,$$

$$\beta_3 = \frac{q_3(1 - \sin^2 t_1 \cos^2 t_2)}{t_3},$$

$$\beta_4 = \frac{q_4(1 - \sin^2 t_1 \sin^2 t_2)}{t_3},$$

$$\beta_5 = \frac{q_5(\sin^2 t_1 \sin t_2 \cos t_2)}{t_3}$$

where $q_i$ is a real number agreed in advance between the base station and the terminal.

In an embodiment, the codeword generation parameters $t_1$, $t_2$ and $t_3$ are real numbers, and are selected from a finite candidate set $\{\{ t_{1,\,1}, t_{2,\,1}, t_{3,\,1} \}, \{ t_{1,\,2}, t_{2,\,2}, t_{3,\,2} \},..., \{t_{1,G}, t_{2,G}, t_{3,G} \}\}$, where G represents the total number of codewords generated by the codeword generation model.

In an embodiment, the calculation formula for the codeword generation parameters $t_1$, $t_2$ and $t_3$ is:

$$t_{1,g} = -1 + \frac{2l_x}{O_x N_x},$$

$$t_{2,g} = -1 + \frac{2l_y}{O_y N_y},$$

$$t_{3,g} = \frac{k}{O_t N_t{}^2}$$

wherein, $l_x \in \{0,1,...,O_x N_x - 1\}$, $l_y \in \{0,1,...,O_y N_y - 1\}$, $k \in \{0,1,...,O_t N_t - 1\}$ and $O_x$, $O_y$, $O_t$ are preset real numbers, $N_t = N_x N_y$, and the index combination $(l_x, l_y, k)$ and g have a determined mapping relationship.

In another embodiment, the calculation formula for the codeword generation parameters $t_1$, $t_2$, $t_3$ is:

$$t_{1,g} = -\frac{\pi}{2} + \frac{\pi l_1}{O_1 N_x},$$

$$t_{2,g} = \frac{\pi l_2}{O_2 N_y},$$

$$t_{3,g} = \frac{l_3}{O_3 N_t{}^2}$$

wherein, $l_1 \in \{0,1, ..., O_1 N_x - 1\}$, $l_2 \in \{0,1, ..., O_2 N_y - 1\}$, $l_3 \in \{0,1, ..., O_3 N_t - 1\}$ and $O_1$, $O_2$ and $O_3$ are preset real numbers, $N_t = N_x N_y$, and the index combination $(l_1, l_2, l_3)$ and g have a determined mapping relationship.

In an embodiment, the codeword is in the form of a vector or matrix and is used to characterize channel information. It can be understood that the transformation of the location of each unit of the codeword does not change the feedback performance, and any transformation of the location of each unit of the codeword can be considered as an equivalent transformation.

S300: the terminal obtains a target codeword according to the channel information and the codeword.

In an embodiment, the codeword is obtained by traversing each element in a finite candidate set $\{\{t_{1,1}, t_{2,1}, t_{3,1}\},\{t_{1,2}, t_{2,2}, t_{3,2}\},...,\{t_{1,G}, t_{2,G}, t_{3,G}\}\}$, and the target codeword is obtained by at least one element in the finite candidate set.

S400: the terminal determines codeword generation parameters corresponding to the target codeword, and feeds back the codeword generation parameters to the base station.

In an embodiment, a terminal determines codeword generation parameters corresponding to the target codeword, which are indicated by a PMI, wherein the codeword generation parameters are real numbers and are elements in the finite candidate set.

Fig. 2 is a flowchart of a channel information acquisition method applied to a base station according to an embodiment of the present disclosure. As shown in the figure, the channel information acquisition method includes, but is not limited to S500, S600 and S700.

S500: the base station generates a codeword according to a preset codeword generation model. In an embodiment, there is at least one codeword in the codeword generation model, and the calculation formula of the codeword generation model is $pe^{-j\pi(\beta_1 n_x + \beta_2 n_y + \beta_3 n_x^2 + \beta_4 n_y^2 + \beta_5 n_x n_y)}$. where p is a scalar, and may be agreed in advance by a base station and a terminal, or determined according to codeword generation parameters fed back by the terminal $n_x \in \{0,1, ..., N_x - 1\}$, $n_y \in \{0,1, ..., N_y - 1\}$; $N_x$ and $N_y$ are dimension information parameters used for codeword generation, $N_x$ and $N_y$ are determined according to the number of antenna ports in different dimensions of a uniform antenna array, and are integers configured by a base station to a terminal; $\beta_1$, $\beta_2$, $\beta_3$, $\beta_4$ and $\beta_5$ are model coefficients, the model coefficients are real numbers, are determined according to the codeword generation parameters $t_1$, $t_2$ and $t_3$ fed back by the terminal, and have a preset mapping relationship with the codeword generation parameters.

In an embodiment, $\beta_3$, $\beta_4$ and $\beta_5$ are not 0 simultaneously. It can be understood that when the UE is in the near field, the phase increases nonlinearly and cannot be approximated as an electromagnetic wave incident on or emitted from the antenna array in the form of a plane wave. When $\beta_1$, $\beta_2$ and $\beta_3$ are not 0 simultaneously, the phase in the model adopts a quadratic bivariate polynomial, which can more accurately reflect the electromagnetic wave incident on or emitted from the antenna array in the form of an approximate spherical wave.

In an embodiment, $\beta_3$, $\beta_4$ and $\beta_5$ may be 0 simultaneously for some of the generated codewords, and these codewords may still be regarded as conforming to the codeword generation model. It can be understood that, when the UE is located at a far field, an electromagnetic wave may be approximated to be incident on to or emergent from an antenna array in the form of a plane wave, $\beta_3$, $\beta_4$ and $\beta_5$ may be approximated to be 0, and phases form an arithmetic progression, and increase linearly.

In an embodiment, the preset mapping relationship between the model coefficient $\beta_i$ and the codeword generation parameters $t_j$ is:

$$\beta_1 = f_1(t_1),$$

$$\beta_2 = f_2(t_2),$$

$$\beta_3 = f_3(t_1, t_3),$$

$$\beta_4 = f_4(t_2, t_3),$$

$$\beta_5 = f_5(t_1, t_2, t_3)$$

wherein, $t_1$, $t_2$ and $t_3$ are codeword generation parameters, and all model coefficients $\beta_1$, $\beta_2$, $\beta_3$, $\beta_4$ and $\beta_5$ in the codeword generation model can be represented as a function $f_i$ of the codeword generation parameters $t_1$, $t_2$ and $t_3$, wherein $f_i$ is a function agreed in advance between a base station and a terminal.

In an embodiment, the preset mapping relationship between the model coefficient $\beta_i$ and the codeword generation parameters $t_j$ is:

$$\beta_1 = q_1 t_1,$$

$$\beta_2 = q_2 t_2,$$

$$\beta_3 = q_3(1 - t_1{}^2)t_3,$$

$$\beta_4 = q_4(1 - t_2{}^2)t_3,$$

$$\beta_5 = q_5 t_1 t_2 t_3$$

wherein $q_i$ is a real number agreed in advance between the base station and the terminal.

In another embodiment, the preset mapping relationship between the model coefficient $\beta_i$ and the codeword generation parameters $t_j$ is:

$$\beta_1 = q_1 t_1,$$

$$\beta_2 = q_2 t_2,$$

$$\beta_3 = \frac{q_3(1 - t_1{}^2)}{t_3},$$

$$\beta_4 = \frac{q_4(1 - t_2{}^2)}{t_3},$$

$$\beta_5 = \frac{q_5 t_1 t_2}{t_3}$$

wherein $q_i$ is a real number agreed in advance between the base station and the terminal.

In an embodiment, the preset mapping relationship between the model coefficient $\beta_i$ and the codeword generation parameters $t_j$ is:

$$\beta_1 = f_1(t_1, t_2),$$

$$\beta_2 = f_2(t_1, t_2),$$

$$\beta_3 = f_3(t_1, t_2, t_3),$$

$$\beta_4 = f_4(t_1, t_2, t_3),$$

$$\beta_5 = f_5(t_1, t_2, t_3)$$

wherein, $t_1, t_2$ and $t_3$ are codeword generation parameters, and all model coefficients $\beta_1, \beta_2, \beta_3, \beta_4$ and $\beta_5$ in the codeword generation model can be represented as a function $f_j$ of the codeword generation parameters $t_1$, $t_2$ and $t_3$, wherein $f_j$ is a function agreed in advance between a base station and a terminal.

In an embodiment, the preset mapping relationship between the model coefficient $\beta_i$ and the codeword generation parameters $t_j$ is:

$$\beta_1 = q_1 \sin t_1 \cos t_2,$$

$$\beta_2 = q_2 \sin t_1 \sin t_2,$$

$$\beta_3 = q_3(1 - \sin^2 t_1 \cos^2 t_2)t_3,$$

$$\beta_4 = q_4(1 - \sin^2 t_1 \sin^2 t_2)t_3,$$

$$\beta_5 = q_5(\sin^2 t_1 \sin t_2 \cos t_2)t_3$$

where $q_i$ is a real number agreed in advance between the base station and the terminal.

In an embodiment, the preset mapping relationship between the model coefficient $\beta_i$ and the codeword generation parameters $t_j$ is:

$$\beta_1 = q_1 \sin t_1 \cos t_2,$$

$$\beta_2 = q_2 \sin t_1 \sin t_2,$$

$$\beta_3 = \frac{q_3(1 - \sin^2 t_1 \cos^2 t_2)}{t_3},$$

$$\beta_4 = \frac{q_4(1 - \sin^2 t_1 \sin^2 t_2)}{t_3},$$

$$\beta_5 = \frac{q_5(\sin^2 t_1 \sin t_2 \cos t_2)}{t_3}$$

wherein $q_i$ is a real number agreed in advance between the base station and the terminal.

In an embodiment, the codeword generation parameters $t_1, t_2, t_3$ are real numbers, and are selected from a finite candidate set $\{\{t_{1,1}, t_{2,1}, t_{3,1}\}, \{t_{1,2}, t_{2,2}, t_{3,2}\},..., \{t_{1,G}, t_{2,G}, t_{3,G}\}\}$, where G represents the total number of codewords generated by the codeword generation model.

In an embodiment, the calculation formula for the codeword generation parameters $t_1, t_2$ and $t_3$ is:

$$t_{1,g} = -1 + \frac{2l_x}{O_x N_x},$$

$$t_{2,g} = -1 + \frac{2l_y}{O_y N_y},$$

$$t_{3,g} = \frac{k}{O_t N_t^2}$$

wherein, $l_x \in \{0,1,...,O_x N_x - 1\}$, $l_y \in \{0,1,...,O_y N_y - 1\}$, $k \in \{0,1,...,O_t N_t - 1\}$ and $O_x$, $O_y$, $O_t$ are preset real numbers, $N_t = N_x N_y$, and the index combination ($l_x$, $l_y$, $k$) and g have a determined mapping relationship.

In another embodiment, the calculation formula for the codeword generation parameters $t_1$, $t_2$ and $t_3$ is:

$$t_{1,g} = -\frac{\pi}{2} + \frac{\pi l_1}{O_1 N_x},$$

$$t_{2,g} = \frac{\pi l_2}{O_2 N_y},$$

$$t_{3,g} = \frac{l_3}{O_3 N_t^2}$$

wherein, $l_1 \in \{0,1, ..., O_1 N_x - 1\}$, $l_2 \in \{0,1, ..., O_2 N_y - 1\}$, $l_3 \in \{0,1,..., O_3 N_t - 1\}$ and $O_1$, $O_2$, $O_3$ are preset real numbers, $N_t = N_x N_y$, and the index combination ($l_1$, $l_2$, $l_3$) and g have a determined mapping relationship.

In an embodiment, the codeword is obtained by traversing each element in a finite candidate set $\{\{t_{1,1}, t_{2,1}, t_{3,1}\}$, $\{t_{1,2}, t_{2,2}, t_{3,2}\},...,\{t_{1,G}, t_{2,G}, t_{3,G}\}\}$, the number of codewords being G.

In an embodiment, the codeword is in the form of a vector or matrix and is used to characterize channel information. It can be understood that the transformation of the location of each unit of the codeword does not change the feedback performance, and any transformation of the location of each unit of the codeword can be considered as an equivalent transformation.

S600: the base station receives the codeword generation parameters fed back by the terminal.

S700: the base station acquires channel information according to the codeword generation parameters and the codeword.

In an embodiment, after receiving the codeword generation parameters $t_1$, $t_2$, $t_3$ indicated by the PMI, the base station determines the codeword best matching the channel among the codewords by means of an index, and then acquires the channel information according to the codeword best matching the channel.

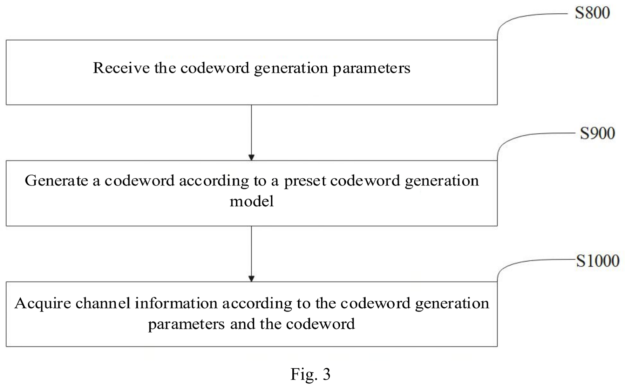

Fig. 3 is a flowchart of a channel information acquisition method applied to a base station according to an embodiment of the present disclosure. As shown in the figure, the channel information acquisition method includes, but is not limited to S800, S900 and S1000.

S800: the base station receives the codeword generation parameters fed back by the terminal.

S900: the base station generates a codeword according to a preset codeword generation model.

In an embodiment, there is at least one codeword in the codeword generation model, and the calculation formula of the codeword generation model is $pe^{-j\pi(\beta_1 n_x + \beta_2 n_y + \beta_3 n_x^2 + \beta_4 n_y^2 + \beta_5 n_x n_y)}$. where p is a scalar, and may be agreed in advance by a base station and a terminal, or determined according to codeword generation parameters fed back by the terminal $n_x \in \{0,1, ..., N_x - 1\}$, $n_y \in \{0,1, ..., N_y - 1\}$; $N_x$ and $N_y$ are dimension information parameters used for codeword generation, $N_x$ and $N_y$ are determined according to the number of antenna ports in different dimensions of a uniform antenna array, and are integers configured by a base station to a terminal; $\beta_1$, $\beta_2$, $\beta_3$, $\beta_4$ and $\beta_5$ are model coefficients, the model coefficients are real numbers, are determined according to the codeword generation parameters $t_1$, $t_2$ and $t_3$ fed back by the terminal, and have a preset mapping relationship with the codeword generation parameters.

In an embodiment, $\beta_3$, $\beta_4$ and $\beta_5$ are not 0 simultaneously. It can be understood that when the UE is in the near field, the phase increases nonlinearly and cannot be approximated as an electromagnetic wave incident on or emitted from the antenna array in the form of a plane wave. When $\beta_1$, $\beta_2$ and $\beta_3$ are not 0 simultaneously, the phase in the model adopts a quadratic bivariate polynomial, which can more accurately reflect the electromagnetic wave incident on or emitted from the antenna array in the form of an approximate spherical wave.

In an embodiment, $\beta_3$, $\beta_4$ and $\beta_5$ may be 0 simultaneously for some of the generated codewords, and these codewords may still be regarded as conforming to the codeword generation model. It can be understood that, when the UE is located at a far field, an electromagnetic wave may be approximated to be incident on to or emergent from an antenna array in the form of a plane wave, $\beta_3$, $\beta_4$ and $\beta_5$ may be approximated to be 0, and phases form an arithmetic progression, and increase linearly.

In an embodiment, the preset mapping relationship between the model coefficient $\beta_i$ and the codeword generation parameters $t_j$ is:

$$\beta_1 = f_1(t_1),$$

$$\beta_2 = f_2(t_2),$$

$$\beta_3 = f_3(t_1, t_3),$$

$$\beta_4 = f_4(t_2, t_3),$$

$$\beta_5 = f_5(t_1, t_2, t_3)$$

wherein, $t_1$, $t_2$, and $t_3$ are codeword generation parameters, and all model coefficients $\beta_1$, $\beta_2$, $\beta_3$, $\beta_4$ and $\beta_5$ in the codeword generation model can be represented as a function $f_i$ of the codeword generation parameters $t_1$, $t_2$ and $t_3$, wherein $f_i$ is a function agreed in advance between a base station and a terminal.

In an embodiment, the preset mapping relationship between the model coefficient $\beta_i$ and the codeword generation parameters $t_j$ is:

$$\beta_1 = q_1 t_1,$$

$$\beta_2 = q_2 t_2,$$

$$\beta_3 = q_3(1 - t_1{}^2)t_3,$$

$$\beta_4 = q_4(1 - t_2{}^2)t_3,$$

$$\beta_5 = q_5 t_1 t_2 t_3$$

wherein $q_i$ is a real number agreed in advance between the base station and the terminal.

In another embodiment, the preset mapping relationship between the model coefficient $\beta_i$ and the codeword generation parameters $t_j$ is:

$$\beta_1 = q_1 t_1,$$

$$\beta_2 = q_2 t_2,$$

$$\beta_3 = \frac{q_3(1 - t_1{}^2)}{t_3},$$

$$\beta_4 = \frac{q_4(1 - t_2{}^2)}{t_3},$$

$$\beta_5 = \frac{q_5 t_1 t_2}{t_3}$$

wherein $q_i$ is a real number agreed in advance between the base station and the terminal.

In an embodiment, the preset mapping relationship between the model coefficient $\beta_i$ and the codeword generation parameters $t_j$ is:

$$\beta_1 = f_1(t_1, t_2),$$

$$\beta_2 = f_2(t_1, t_2),$$

$$\beta_3 = f_3(t_1, t_2, t_3),$$

$$\beta_4 = f_4(t_1, t_2, t_3),$$

$$\beta_5 = f_5(t_1, t_2, t_3)$$

wherein, $t_1$, $t_2$ and $t_3$ are codeword generation parameters, and all model coefficients $\beta_1$, $\beta_2$, $\beta_3$, $\beta_4$ and $\beta_5$ in the codeword generation model can be represented as a function $f_i$ of the codeword generation parameters $t_1$, $t_2$, $t_3$, wherein $f_i$ is a function agreed in advance between a base station and a terminal.

In an embodiment, the preset mapping relationship between the model coefficient $\beta_i$ and the codeword generation parameters $t_j$ is:

$$\beta_1 = q_1 \sin t_1 \cos t_2,$$

$$\beta_2 = q_2 \sin t_1 \sin t_2,$$

$$\beta_3 = q_3(1 - \sin^2 t_1 \cos^2 t_2)t_3,$$

$$\beta_4 = q_4(1 - \sin^2 t_1 \sin^2 t_2)t_3,$$

$$\beta_5 = q_5(\sin^2 t_1 \sin t_2 \cos t_2)t_3$$

wherein $q_i$ is a real number agreed in advance between the base station and the terminal.

In an embodiment, the preset mapping relationship between the model coefficient $\beta_i$ and the codeword generation parameters $t_j$ is:

$$\beta_1 = q_1 \sin t_1 \cos t_2,$$

$$\beta_2 = q_2 \sin t_1 \sin t_2,$$

$$\beta_3 = \frac{q_3(1 - \sin^2 t_1 \cos^2 t_2)}{t_3},$$

$$\beta_4 = \frac{q_4(1 - \sin^2 t_1 \sin^2 t_2)}{t_3},$$

$$\beta_5 = \frac{q_5(sin^2 t_1 \, sin \, t_2 \, cos \, t_2)}{t_3}$$

wherein $q_i$ is a real number agreed in advance between the base station and the terminal.

In an embodiment, a base station stores all relevant parameters of a preset codeword generation model, and calculates and obtains a codeword according to the codeword generation parameters fed back by a terminal, wherein the codeword is a codeword best matching a channel.

In an embodiment, the codeword is in the form of a vector or matrix and is used to characterize channel information. It can be understood that the transformation of the location of each unit of the codeword does not change the feedback performance, and any transformation of the location of each unit of the codeword can be considered as an equivalent transformation.

S1000: the base station acquires channel information according to the codeword generation parameters and the codeword.

To further illustrate the channel information feedback method and the channel information acquisition method according to the embodiments of the present disclosure, the following examples are used for detailed description.

Example 1

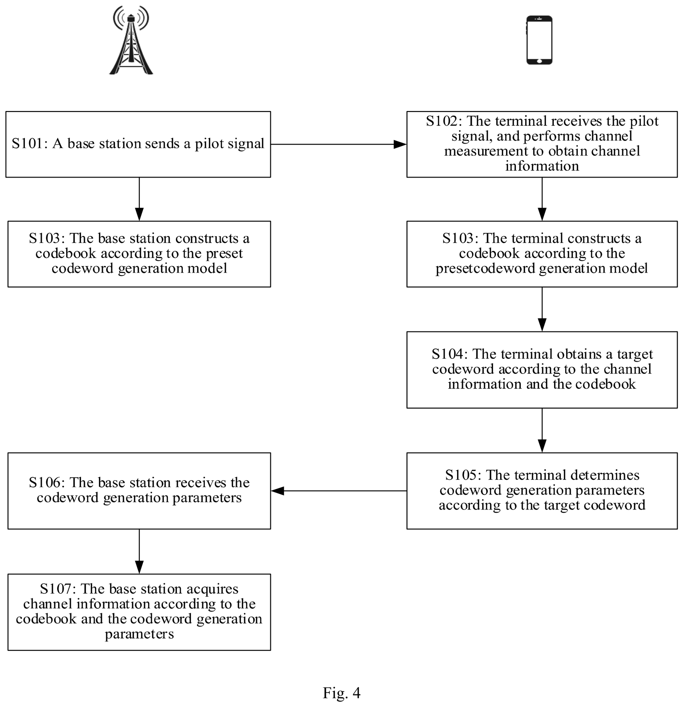

Example 1 provides a method for a base station and a terminal to perform channel information feedback and channel information acquisition by means of a novel codeword generation model. As shown in Fig. 4, the method at least includes the following steps:

S101: a base station sends a pilot frequency signal for channel measurement.

It should be noted that before the base station performs step S101, it includes but is not limited to configuring the UPA and the antennas. In this example, the number of antennas in the horizontal direction and the number of antennas in the perpendicular direction are $N_x$ and $N_y$ respectively. The base station sends a set of Channel State Information-Reference Signal (CSI-RS) pilots of $N_t = N_x N_y$ ports in total for channel measurement.

S102: the terminal receives a pilot signal sent by the base station, and performs channel measurement to obtain channel information.

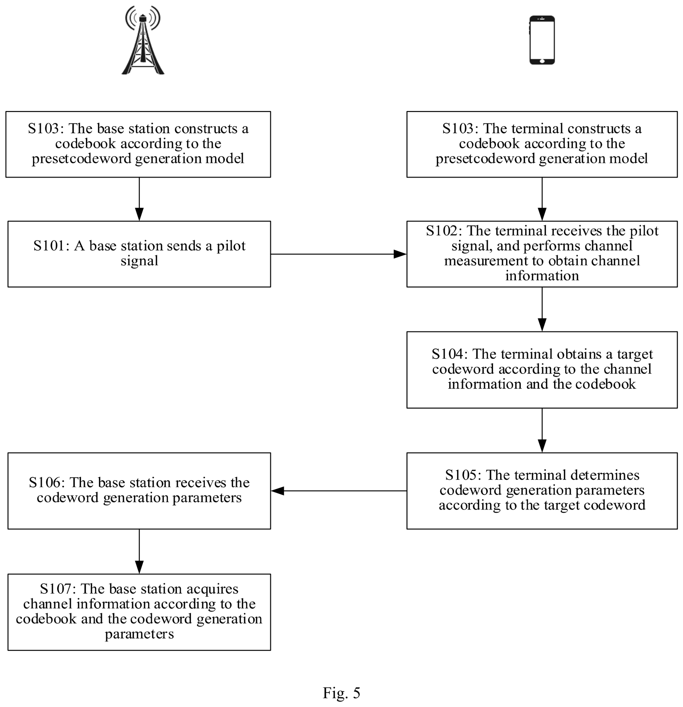

It should be noted that, before the terminal performs S102, it includes but is not limited to configuring antennas. In this example, the number of antennas is $N_r$. The terminal receives pilot configuration information sent by the base station, performs detection on a corresponding resource position, and obtains $N_r \times N_t$ dimensional channel matrix information. As shown in Fig. 5, this example does not strictly limit the steps, for example, S101 and S102 may occur after S103.

S103: the terminal and the base station construct a codebook according to the preset codeword generation model.

In this example, a codebook is constructed according to a codeword generation model, and a generated codeword unit has the following form:

$$\frac{1}{\sqrt{N_t}} e^{-j\pi(\beta_{1,g} n_x + \beta_{2,g} n_y + \beta_{3,g} n_x^2 + \beta_{4,g} n_y^2 + \beta_{5,g} n_x n_y)}$$

wherein, $n_x \in \{0,1,\dots, N_x - 1\}$, $n_y \in \{0,1,\dots,N_y - 1\}$; $g \in \{1,2, \dots , G\}$, $G$ is the size of the codeword candidate set, and the codebook is constructed by traversing the codeword candidate set, $\beta_{1,g}, \beta_{2,g}, \beta_{3,g}, \beta_{4,g}$ and $\beta_{5,g}$ are model coefficients of the codeword generation model, and $t_{1,g}, t_{2,g}$ and $t_{3,g}$ are codeword generation parameters. Further, the model coefficients $\beta_{1,g}, \beta_{2,g}, \beta_{3,g}, \beta_{4,g}$ and $\beta_{5,g}$ in the codebook generation model are determined according to the codeword generation parameters $t_{1,g}, t_{2,g}$ and $t_{3,g}$ fed back by the terminal:

$$t_{1,g} = -1 + \frac{2l_x}{O_x N_x}, l_x \in \{0,1,\dots,O_x N_x - 1\}$$

$$t_{2,g} = -1 + \frac{2l_y}{O_y N_y}, l_y \in \{0,1,\dots,O_y N_y - 1\}$$

$$t_{3,g} = \frac{k}{O_t N_t{}^2}, k \in \{0,1,\ldots,O_t N_t - 1\}$$

$$\beta_1 = t_{1,g},$$

$$\beta_2 = t_{2,g},$$

$$\beta_3 = (1 - t^2{}_{1,g})t_{3,g},$$

$$\beta_4 = (1 - t^2{}_{2,g})t_{3,g},$$

$$\beta_5 = -2t_{1,g}t_{2,g}t_{3,g}$$

wherein, $O_x, O_y$ and $O_t$ are real numbers agreed in advance between the base station and the terminal, and the index combination ($l_x$, $l_y$, $k$) has a one-to-one correspondence with g. The finally generated codeword may be expressed as:

$$c_g = \frac{1}{\sqrt{N_t}}$$

$$= \begin{bmatrix} 1 & e^{-j\pi(\beta_{1,g}+\beta_{3,g})} & e^{-j\pi(2\beta_{1,g}+4\beta_{3,g})} & \cdots & e^{-j\pi((N_x-1)\beta_{1,g}+(N_x-1)^2\beta_{3,g})} \\ e^{-j\pi(\beta_{2,g}+\beta_{4,g})} & e^{-j\pi(\beta_{1,g}+\beta_{2,g}+\beta_{3,g}+\beta_{4,g}+\beta_{5,g})} & e^{-j\pi(2\beta_{1,g}+\beta_{2,g}+4\beta_{3,g}+\beta_{4,g}+2\beta_{5,g})} & \cdots & e^{-j\pi(\beta_{1,g}+(N_x-1)\beta_{2,g}+\beta_{3,g}+(N_x-1)^2\beta_{4,g}+(N_x-1)\beta_{5,g})} \\ e^{-j\pi(2\beta_{2,g}+4\beta_{4,g})} & e^{-j\pi(\beta_{1,g}+2\beta_{2,g}+\beta_{3,g}+4\beta_{4,g}+2\beta_{5,g})} & e^{-j\pi(2\beta_{1,g}+2\beta_{2,g}+4\beta_{3,g}+4\beta_{4,g}+4\beta_{5,g})} & \cdots & e^{-j\pi((N_x-1)\beta_{1,g}+2\beta_{2,g}+(N_x-1)^2\beta_{3,g}+4\beta_{4,g}+2(N_x-1)\beta_{5,g})} \\ \vdots & \vdots & \vdots & \ddots & \vdots \\ e^{-j\pi((N_y-1)\beta_{2,g}+(N_y-1)^2\beta_{4,g})} & e^{-j\pi(\beta_{1,g}+(N_y-1)\beta_{2,g}+\beta_{3,g}+(N_y-1)^2\beta_{4,g}+(N_y-1)\beta_{5,g})} & e^{-j\pi(2\beta_{1,g}+(N_y-1)\beta_{2,g}+4\beta_{3,g}+(N_y-1)^2\beta_{4,g}+2(N_y-1)\beta_{5,g})} & \cdots & e^{-j\pi((N_x-1)\beta_{1,g}+(N_y-1)\beta_{2,g}+(N_x-1)^2\beta_{3,g}+(N_y-1)^2\beta_{4,g}+(N_x-1)(N_y-1)\beta_{5,g})} \end{bmatrix}$$

S104: the terminal obtains a target codeword according to the channel information and the codebook.

In this example, the terminal selects, according to a $N_r \times N_t$ dimensional channel matrix, a codeword best matching a channel from the codebook as a target codeword, wherein the selection manner of the target codeword is not limited.

S105: the terminal determines codeword generation parameters according to the target codeword and feeds back the codeword generation parameters to the base station, wherein the codeword generation parameters $t_{1,g}$, $t_{2,g}$ and $t_{3,g}$ are indicated by a PMI.

S106: the base station receives the codeword generation parameters fed back by the terminal.

S107: the base station acquires channel information according to the codebook and the received codeword generation parameters.

In this example, the base station has pre-created the codebook. The codeword generation parameters indicated by the PMI and received by the base station are either codebook indices or have a one-to-one correspondence with codebook indices. This allows the base station to directly query the codebook using the codeword generation parameters to obtain the optimal codeword, thereby acquiring channel information. The method effectively improves the query speed.

Example 2

Example 2 provides a method for a base station and a terminal to perform channel information feedback and channel information acquisition by means of a novel codeword generation model, which at least includes:
S201: a base station sends a pilot frequency signal for channel measurement.

It should be noted that before the base station performs step S201, it includes but is not limited to configuring the UPA and the antennas. In this example, the number of antennas in the horizontal direction and the number of antennas in the perpendicular direction are $N_x$ and $N_y$ respectively. The base station sends a set of Channel State Information-Reference Signal (CSI-RS) pilots of $N_t = N_x N_y$ ports in total for channel measurement.

S202: the terminal receives a pilot signal sent by the base station, and performs channel measurement to obtain channel information.

It should be noted that, before the terminal performs S202, it includes but is not limited to configuring antennas. In this example, the number of antennas is $N_r$. The terminal receives pilot configuration information sent by the base station, performs detection on a corresponding resource position, and obtains $N_r \times N_t$ dimensional channel matrix information.

S203: the terminal and the base station construct a codebook according to the preset codeword generation model.

In this example, a codebook is constructed according to a codeword generation model, and a generated codeword unit has the following form:

$$\frac{1}{\sqrt{N_t}} e^{-j\pi(\beta_{1,g}n_x + \beta_{2,g}n_y + \beta_{3,g}n_x{}^2 + \beta_{4,g}n_y{}^2 + \beta_{5,g}n_xn_y)}$$

wherein, $n_x \in \{0,1,..., N_x - 1\}$, $n_y \in \{0,1,..., N_y - 1\}$; $g \in \{1,2,...,G\}$, G is the size of the codeword candidate set, and the codebook is constructed by traversing the codeword candidate set, $\beta_{1,g}$, $\beta_{2,g}$, $\beta_{3,g}$, $\beta_{4,g}$ and $\beta_{5,g}$ are model coefficients of the codeword generation model, and $t_{1,g}$, $t_{2,g}$ and $t_{3,g}$ are codeword generation parameters. Further, the model coefficients $\beta_{1,g}$, $\beta_{2,g}$, $\beta_{3,g}$, $\beta_{4,g}$ and $\beta_{5,g}$ in the codebook generation model are determined according to the codeword generation parameters $t_{1,g}$, $t_{2,g}$ and $t_{3,g}$ fed back by the terminal:

$$t_{1,g} = -1 + \frac{2l_x}{O_x N_x}, l_x \in \{0,1,\ldots,O_x N_x - 1\}$$

$$t_{2,g} = -1 + \frac{2l_y}{O_y N_y}, l_y \in \{0,1,\ldots,O_y N_y - 1\}$$

$$t_{3,g} = \frac{k}{O_t N_t{}^2}, k \in \{0,1,\ldots,O_t N_t - 1\}$$

$$\beta_1 = t_{1,g},$$

$$\beta_2 = t_{2,g},$$

$$\beta_3 = \frac{(1 - t^2{}_{1,g})}{t_{3,g}},$$

$$\beta_4 = \frac{(1 - t^2{}_{2,g})}{t_{3,g}},$$

$$\beta_5 = \frac{-2t_{1,g}t_{2,g}}{t_{3,g}}$$

wherein, $O_x, O_y$ and $O_t$ are real numbers agreed in advance between the base station and the terminal, and the index combination $(l_x, l_y, k)$ has a one-to-one correspondence with g. The finally generated CODEWORD MAY BE EXPRESSED AS:

$$c_g = \frac{1}{\sqrt{N_t}}$$

$$= \begin{bmatrix} 1 & e^{-j\pi(\beta_{1,g}+\beta_{3,g})} & e^{-j\pi(2\beta_{1,g}+4\beta_{3,g})} & \cdots & e^{-j\pi((N_x-1)\beta_{1,g}+(N_x-1)^2\beta_{3,g})} \\ e^{-j\pi(\beta_{2,g}+\beta_{4,g})} & e^{-j\pi(\beta_{1,g}+\beta_{2,g}+\beta_{3,g}+\beta_{4,g}+\beta_{5,g})} & e^{-j\pi(2\beta_{1,g}+\beta_{2,g}+4\beta_{3,g}+\beta_{4,g}+2\beta_{5,g})} & \cdots & e^{-j\pi(\beta_{1,g}+(N_x-1)\beta_{2,g}+\beta_{3,g}+(N_x-1)^2\beta_{4,g}+(N_x-1)\beta_{5,g})} \\ e^{-j\pi(2\beta_{2,g}+4\beta_{4,g})} & e^{-j\pi(\beta_{1,g}+2\beta_{2,g}+\beta_{3,g}+4\beta_{4,g}+2\beta_{5,g})} & e^{-j\pi(2\beta_{1,g}+2\beta_{2,g}+4\beta_{3,g}+4\beta_{4,g}+4\beta_{5,g})} & \cdots & e^{-j\pi((N_x-1)\beta_{1,g}+2\beta_{2,g}+(N_x-1)^2\beta_{3,g}+4\beta_{4,g}+2(N_x-1)\beta_{5,g})} \\ \vdots & \vdots & \vdots & \ddots & \vdots \\ e^{-j\pi((N_y-1)\beta_{2,g}+(N_y-1)^2\beta_{4,g})} & e^{-j\pi(\beta_{1,g}+(N_y-1)\beta_{2,g}+\beta_{3,g}+(N_y-1)^2\beta_{4,g}+(N_y-1)\beta_{5,g})} & e^{-j\pi(2\beta_{1,g}+(N_y-1)\beta_{2,g}+4\beta_{3,g}+(N_y-1)^2\beta_{4,g}+2(N_y-1)\beta_{5,g})} & \cdots & e^{-j\pi((N_x-1)\beta_{1,g}+(N_y-1)\beta_{2,g}+(N_x-1)^2\beta_{3,g}+(N_y-1)^2\beta_{4,g}+(N_x-1)(N_y-1)\beta_{5,g})} \end{bmatrix}$$

S204: the terminal obtains a target codeword according to the channel information and the codebook.

In this example, the terminal selects, according to a $N_r \times N_t$ dimensional channel matrix, a codeword best matching a channel from the codebook as a target codeword, wherein the selection manner of the target codeword is not limited.

S205: the terminal determines codeword generation parameters according to the target codeword and feeds back the codeword generation parameters to the base station, wherein the codeword generation parameters $t_{1,g}$, $t_{2,g}$ and $t_{3,g}$ are indicated by a PMI.

S206: the base station receives the codeword generation parameters fed back by the terminal.

S207: the base station acquires channel information according to the codebook and the received codeword generation parameters.

In this example, the base station has pre-created the codebook. The codeword generation parameters indicated by the PMI and received by the base station are either codebook indices or have a one-to-one correspondence with codebook indices. This allows the base station to directly query the codebook using the codeword generation parameters to obtain the optimal codeword, thereby acquiring channel information. The method effectively improves the query speed.

Example 3

Example 3 provides a method for a base station and a terminal to perform channel information feedback and channel information acquisition by means of a novel codeword generation model, which at least includes:

S301: a base station sends a pilot frequency signal for channel measurement.

It should be noted that before the base station performs step S301, it includes but is not limited to configuring the UPA and the antennas. In this example, the number of antennas in the horizontal direction and the number of antennas in the perpendicular direction are $N_x$ and $N_y$ respectively. The base station sends a set of Channel State Information-Reference Signal (CSI-RS) pilots of $N_t = N_x N_y$ ports in total for channel measurement.

S302: the terminal receives a pilot signal sent by the base station, and performs channel measurement to obtain channel information.

It should be noted that, before the terminal performs S302, it includes but is not limited to configuring antennas. In this example, the number of antennas is $N_r$. The terminal receives pilot configuration information sent by the base station, performs detection on a corresponding resource position, and obtains $N_r \times N_t$ dimensional channel matrix information.

S303: the terminal and the base station construct a codebook according to the preset codeword generation model.

In this example, a codebook is constructed according to a codeword generation model, and a generated codeword unit has the following form:

$$\frac{1}{\sqrt{N_t}} e^{-j\pi(\beta_{1,g}n_x + \beta_{2,g}n_y + \beta_{3,g}n_x{}^2 + \beta_{4,g}n_y{}^2 + \beta_{5,g}n_x n_y)}$$

wherein, $n_x \in \{0,1,\dots , N_x - 1\}$, $n_y \in \{0,1,\dots,N, - 1\}$; $g \in \{1,2, \dots , G\}$ , $G$ is the size of the codeword candidate set, and the codebook is constructed by traversing the codeword candidate set, $\beta_{1,g}$, $\beta_{2,g}$, $\beta_{3,g}$, $\beta_{4,g}$ and $\beta_{5,g}$ are model coefficients of the codeword generation model, and $t_{1,g}$, $t_{2,g}$ and $t_{3,g}$ are codeword generation parameters. Further, the model coefficients $\beta_{1,g}$, $\beta_{2,g}$, $\beta_{3,g}$, $\beta_{4,g}$ and $\beta_{5,g}$ in the codebook generation model are determined according to the codeword generation parameters $t_{1,g}$, $t_{2,g}$ and $t_{3,g}$ fed back by the terminal:

$$t_{1,g} = -\frac{\pi}{2} + \frac{\pi l_1}{O_1 N_x}, l_x \in \{0,1,\dots,O_1 N_x - 1\}$$

$$t_{2,g} = \frac{\pi l_2}{O_2 N_y}, l_y \in \{0,1,\dots,O_2 N_y - 1\}$$

$$t_{3,g} = \frac{l_3}{O_3 N_t{}^2}, k \in \{0,1,\dots,O_3 N_t - 1\}$$

$$\beta_1 = \sin t_{1,g} \cos t_{2,g},$$

$$\beta_2 = \sin t_{1,g} \sin t_{2,g},$$

$$\beta_3 = (1 - \sin^2 t_{1,g} \cos^2 t_{2,g})t_{3,g},$$

$$\beta_4 = (1 - sin^2\, t_{1,g}\, sin^2\, t_{2,g})t_{3,g},$$

$$\beta_5 = -2(sin^2\, t_{1,g}\, sin\, t_{2,g}\, cos\, t_{2,g})\, cos\, t_{3,g}$$

wherein, $O_x$, $O_y$ and $O_t$ are real numbers agreed in advance between the base station and the terminal, and the index combination $(I_x, I_y, k)$ has a one-to-one correspondence with g. The finally generated codeword may be expressed as:

$$c_g = \frac{1}{\sqrt{N_t}}$$

$$= \begin{bmatrix} 1 & e^{-j\pi(\beta_{1,g}+\beta_{3,g})} & e^{-j\pi(2\beta_{1,g}+4\beta_{3,g})} & \cdots & e^{-j\pi((N_x-1)\beta_{1,g}+(N_x-1)^2\beta_{3,g})} \\ e^{-j\pi(\beta_{2,g}+\beta_{4,g})} & e^{-j\pi(\beta_{1,g}+\beta_{2,g}+\beta_{3,g}+\beta_{4,g}+\beta_{5,g})} & e^{-j\pi(2\beta_{1,g}+\beta_{2,g}+4\beta_{3,g}+\beta_{4,g}+2\beta_{5,g})} & \cdots & e^{-j\pi(\beta_{1,g}+(N_x-1)\beta_{2,g}+\beta_{3,g}+(N_x-1)^2\beta_{4,g}+(N_x-1)\beta_{5,g})} \\ e^{-j\pi(2\beta_{2,g}+4\beta_{4,g})} & e^{-j\pi(\beta_{1,g}+2\beta_{2,g}+\beta_{3,g}+4\beta_{4,g}+2\beta_{5,g})} & e^{-j\pi(2\beta_{1,g}+2\beta_{2,g}+4\beta_{3,g}+4\beta_{4,g}+4\beta_{5,g})} & \cdots & e^{-j\pi((N_x-1)\beta_{1,g}+2\beta_{2,g}+(N_x-1)^2\beta_{3,g}+4\beta_{4,g}+2(N_x-1)\beta_{5,g})} \\ \vdots & \vdots & \vdots & \ddots & \vdots \\ e^{-j\pi((N_y-1)\beta_{2,g}+(N_y-1)^2\beta_{4,g})} & e^{-j\pi(\beta_{1,g}+(N_y-1)\beta_{2,g}+\beta_{3,g}+(N_y-1)^2\beta_{4,g}+(N_y-1)\beta_{5,g})} & e^{-j\pi(2\beta_{1,g}+(N_y-1)\beta_{2,g}+4\beta_{3,g}+(N_y-1)^2\beta_{4,g}+2(N_y-1)\beta_{5,g})} & \cdots & e^{-j\pi((N_x-1)\beta_{1,g}+(N_y-1)\beta_{2,g}+(N_x-1)^2\beta_{3,g}+(N_y-1)^2\beta_{4,g}+(N_x-1)(N_y-1)\beta_{5,g})} \end{bmatrix}$$

S304: the terminal obtains a target codeword according to the channel information and the codebook.

In this example, the terminal selects, according to a $N_r \times N_t$ dimensional channel matrix, a codeword best matching a channel from the codebook as a target codeword, wherein the selection manner of the target codeword is not limited.

S305: the terminal determines codeword generation parameters according to the target codeword and feeds back the codeword generation parameters to the base station, wherein the codeword generation parameters $t_{1,g}$, $t_{2,g}$ and $t_{3,g}$ are indicated by a PMI.

S306: the base station receives the codeword generation parameters fed back by the terminal.

S307: the base station acquires channel information according to the codebook and the received codeword generation parameters.

In this example, the base station has pre-created the codebook. The codeword generation parameters indicated by the PMI and received by the base station are either codebook indices or have a one-to-one correspondence with codebook indices. This allows the base station to directly query the codebook using the codeword generation parameters to obtain the optimal codeword, thereby acquiring channel information. The method effectively improves the query speed.

Example 4

Example 4 provides a method for a base station and a terminal to perform channel information feedback and channel information acquisition by means of a novel codeword generation model, which at least includes:
S401: a base station sends a pilot frequency signal for channel measurement.

It should be noted that before the base station performs step S401, it includes but is not limited to configuring the UPA and the antennas. In this example, the number of antennas in the horizontal direction and the number of antennas in the perpendicular direction are $N_x$ and $N_y$ respectively. The base station sends a set of Channel State Information-Reference Signal (CSI-RS) pilots of $N_t = N_x N_y$ ports in total for channel measurement.

S402: the terminal receives a pilot signal sent by the base station, and performs channel measurement to obtain channel information.

It should be noted that, before the terminal performs S402, it includes but is not limited to configuring antennas. In this example, the number of antennas is $N_r$. The terminal receives pilot configuration information sent by the base station, performs detection on a corresponding resource position, and obtains $N_r \times N_t$ dimensional channel matrix information.

S403: the terminal and the base station construct a codebook according to the preset codeword generation model.

In this example, a codebook is constructed according to a codeword generation model, and a generated codeword unit has the following form:

$$\frac{1}{\sqrt{N_t}}e^{-j\pi(\beta_{1,g}n_x+\beta_{2,g}n_y+\beta_{3,g}n_x{}^2+\beta_{4,g}n_y{}^2+\beta_{5,g}n_x n_y)}$$

wherein, $n_x \in \{0,1,...,N_x - 1\}$, $n_y \in \{0,1,...,N_y - 1\}$; $g \in \{1,2, ..., G\}$, G is the size of the codeword candidate set, and the codebook is constructed by traversing the codeword candidate set, $\beta_{1,g}$, $\beta_{2,g}$, $\beta_{3,g}$, $\beta_{4,g}$ and $\beta_{5,g}$ are model coefficients of the codeword generation model, and $t_{1,g}$, $t_{2,g}$ and $t_{3,g}$ are codeword generation parameters. Further, the model coefficients $\beta_{1,g}$, $\beta_{2,g}$, $\beta_{3,g}$, $\beta_{4,g}$ and $\beta_{5,g}$ in the codebook generation model are determined according to the codeword generation parameters $t_{1,g}$, $t_{2,g}$ and $t_{3,g}$ fed back by the terminal:

$$t_{1,g} = -\frac{\pi}{2} + \frac{\pi l_1}{O_1 N_x}, l_x \in \{0,1,\ldots,O_1 N_x - 1\}$$

$$t_{2,g} = \frac{\pi l_2}{O_2 N_y}, l_y \in \{0,1,\ldots,O_2 N_y - 1\}$$

$$t_{3,g} = \frac{l_3}{O_3 N_t^2}, k \in \{0,1,\ldots,O_3 N_t - 1\}$$

$$\beta_1 = \sin t_{1,g} \cos t_{2,g},$$

$$\beta_2 = \sin t_{1,g} \sin t_{2,g},$$

$$\beta_3 = \frac{(1 - \sin^2 t_{1,g} \cos^2 t_{2,g})}{t_{3,g}},$$

$$\beta_4 = \frac{(1 - \sin^2 t_{1,g} \sin^2 t_{2,g})}{t_{3,g}},$$

$$\beta_5 = \frac{-2(\sin^2 t_{1,g} \sin t_{2,g} \cos t_{2,g})}{\cos t_{3,g}}$$

wherein, $O_x$, $O_y$ and $O_t$ are real numbers agreed in advance between the base station and the terminal, and the index combination ($l_x$, $l_y$, $k$) has a one-to-one correspondence with g. The finally generated codeword may be expressed as:

$$c_g = \frac{1}{\sqrt{N_t}}$$

$$= \begin{bmatrix} 1 & e^{-j\pi(\beta_{1,g}+\beta_{3,g})} & e^{-j\pi(2\beta_{1,g}+4\beta_{3,g})} & \cdots & e^{-j\pi((N_x-1)\beta_{1,g}+(N_x-1)^2\beta_{3,g})} \\ e^{-j\pi(\beta_{2,g}+\beta_{4,g})} & e^{-j\pi(\beta_{1,g}+\beta_{2,g}+\beta_{3,g}+\beta_{4,g}+\beta_{5,g})} & e^{-j\pi(2\beta_{1,g}+\beta_{2,g}+4\beta_{3,g}+\beta_{4,g}+2\beta_{5,g})} & \cdots & e^{-j\pi(\beta_{1,g}+(N_x-1)\beta_{2,g}+\beta_{3,g}+(N_x-1)^2\beta_{4,g}+(N_x-1)\beta_{5,g})} \\ e^{-j\pi(2\beta_{2,g}+4\beta_{4,g})} & e^{-j\pi(\beta_{1,g}+2\beta_{2,g}+\beta_{3,g}+4\beta_{4,g}+2\beta_{5,g})} & e^{-j\pi(2\beta_{1,g}+2\beta_{2,g}+4\beta_{3,g}+4\beta_{4,g}+4\beta_{5,g})} & \cdots & e^{-j\pi((N_x-1)\beta_{1,g}+2\beta_{2,g}+(N_x-1)^2\beta_{3,g}+4\beta_{4,g}+2(N_x-1)\beta_{5,g})} \\ \vdots & \vdots & \vdots & \ddots & \vdots \\ e^{-j\pi((N_y-1)\beta_{2,g}+(N_y-1)^2\beta_{4,g})} & e^{-j\pi(\beta_{1,g}+(N_y-1)\beta_{2,g}+\beta_{3,g}+(N_y-1)^2\beta_{4,g}+(N_y-1)\beta_{5,g})} & e^{-j\pi(2\beta_{1,g}+(N_y-1)\beta_{2,g}+4\beta_{3,g}+(N_y-1)^2\beta_{4,g}+2(N_y-1)\beta_{5,g})} & \cdots & e^{-j\pi((N_x-1)\beta_{1,g}+(N_y-1)\beta_{2,g}+(N_x-1)^2\beta_{3,g}+(N_y-1)^2\beta_{4,g}+(N_x-1)(N_y-1)\beta_{5,g})} \end{bmatrix}$$

S404: the terminal obtains a target codeword according to the channel information and the codebook.

In this example, the terminal selects, according to a $N_r \times N_t$ dimensional channel matrix, a codeword best matching a channel from the codebook as a target codeword, wherein the selection manner of the target codeword is not limited.

S405: the terminal determines codeword generation parameters according to the target codeword and feeds back the codeword generation parameters to the base station, wherein the codeword generation parameters $t_{1,g}$, $t_{2,g}$ and $t_{3,g}$ are indicated by a PMI.

S406: the base station receives the codeword generation parameters fed back by the terminal.

S407: the base station acquires channel information according to the codebook and the received codeword generation parameters.

In this example, the base station has pre-created the codebook. The codeword generation parameters indicated by the PMI and received by the base station are either codebook indices or have a one-to-one correspondence with codebook indices. This allows the base station to directly query the codebook using the codeword generation parameters to obtain the optimal codeword, thereby acquiring channel information. The method effectively improves the query speed.

Example 5

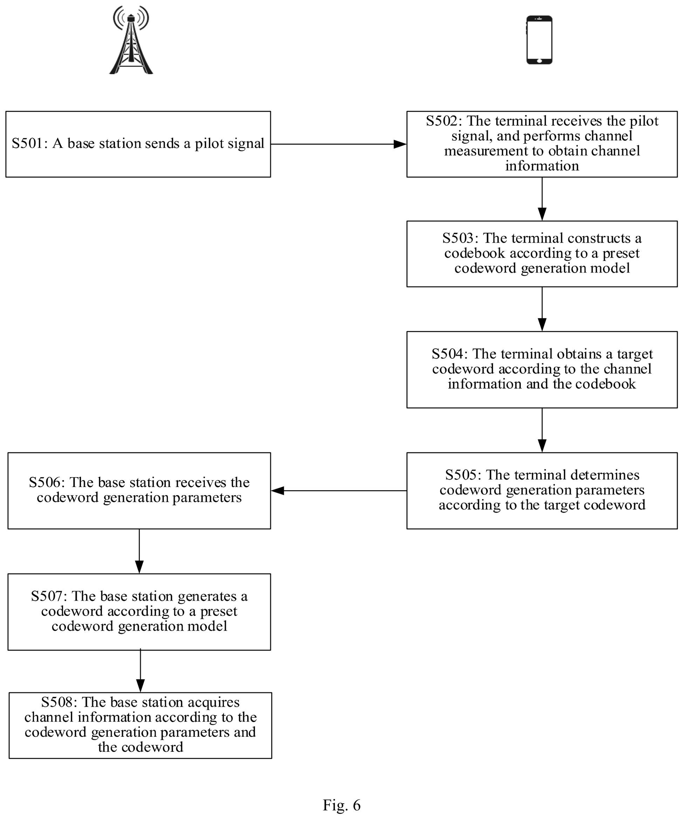

Example 5 provides a method for a base station and a terminal to perform channel information feedback and channel information acquisition by means of a novel codeword generation model. As shown in Fig. 6, the method at least includes the following steps:

S501: a base station sends a pilot frequency signal for channel measurement.

It should be noted that before the base station performs step S501, it includes but is not limited to configuring the UPA and the antennas. In this example, the number of antennas in the horizontal direction and the number of antennas in the perpendicular direction are $N_x$ and $N_y$ respectively. The base station sends a set of Channel State Information-Reference Signal (CSI-RS) pilots of $N_t = N_x N_y$ ports in total for channel measurement.

S502: the terminal receives a pilot signal sent by the base station, and performs channel measurement to obtain channel information.

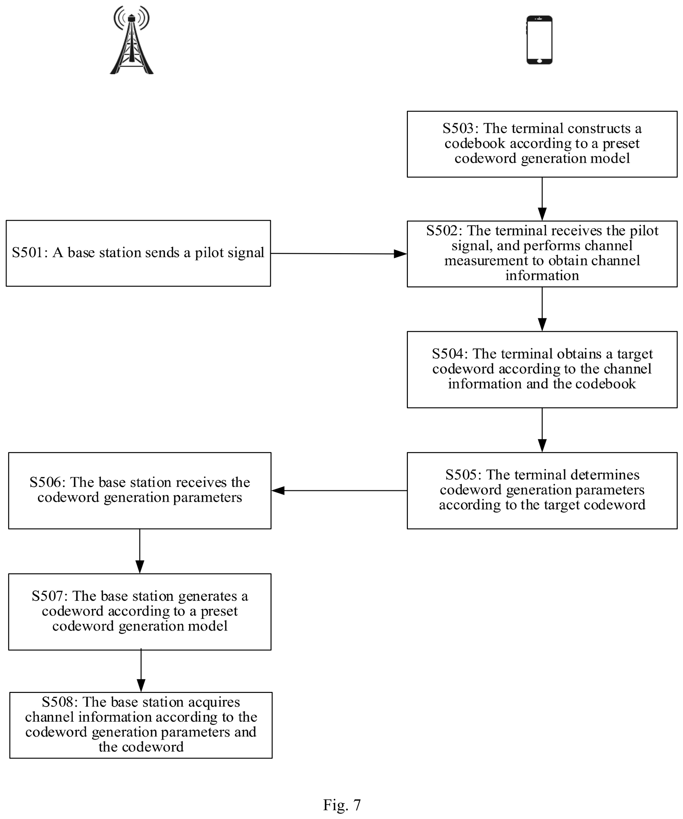

It should be noted that, before the terminal performs S502, it includes but is not limited to configuring antennas. In this example, the number of antennas is $N_r$. The terminal receives pilot configuration information sent by the base station, performs detection on a corresponding resource position, and obtains $N_r \times N_t$ dimensional channel matrix information. As shown in Fig. 7, this example does not strictly limit the steps, for example, S501 and S502 may occur after S503.

S503: the terminal constructs a codebook according to a preset codeword generation model.

In this example, a codebook is constructed according to a codeword generation model, and a generated codeword unit has the following form:

$$\frac{1}{\sqrt{N_t}} e^{-j\pi(\beta_{1,g}n_x + \beta_{2,g}n_y + \beta_{3,g}n_x{}^2 + \beta_{4,g}n_y{}^2 + \beta_{5,g}n_x n_y)}$$

wherein, $n_x \in \{0,1,...,N_x - 1\}$, $n_y \in \{0,1,...,N_y - 1\}$; $g \in \{1,2, ..., G\}$, G is the size of the codeword candidate set, and the codebook is constructed by traversing the codeword candidate set, $\beta_{1,g}$, $\beta_{2,g}$, $\beta_{3,g}$, $\beta_{4,g}$ and $\beta_{5,g}$ are model coefficients of the codeword generation model, and $t_{1,g}$, $t_{2,g}$ and $t_{3,g}$ are codeword generation parameters. Further, the model coefficients $\beta_{1,g}$, $\beta_{2,g}$, $\beta_{3,g}$, $\beta_{4,g}$ and $\beta_{5,g}$ in the codebook generation model are determined according to the codeword generation parameters $t_{1,g}$, $t_{2,g}$ and $t_{3,g}$ fed back by the terminal:

$$t_{1,g} = -1 + \frac{2l_x}{O_x N_x}, l_x \in \{0,1,\ldots,O_x N_x - 1\}$$

$$t_{2,g} = -1 + \frac{2l_y}{O_y N_y}, l_y \in \{0,1,\ldots,O_y N_y - 1\}$$

$$t_{3,g} = \frac{k}{O_t N_t{}^2}, k \in \{0,1,\ldots,O_t N_t - 1\}$$

$$\beta_1 = t_{1,g},$$

$$\beta_2 = t_{2,g},$$

$$\beta_3 = (1 - t^2{}_{1,g})t_{3,g},$$

$$\beta_4 = (1 - t^2{}_{2,g})t_{3,g},$$

$$\beta_5 = -2t_{1,g}t_{2,g}t_{3,g}$$

wherein, $O_x, O_y$ and $O_t$ are real numbers agreed in advance between the base station and the terminal, and the index combination $(l_x, l_y, k)$ has a one-to-one correspondence with g. The finally generated codeword may be expressed as:

$$c_g = \frac{1}{\sqrt{N_t}}$$

$$= \begin{bmatrix} 1 & e^{-j\pi(\beta_{1,g}+\beta_{3,g})} & e^{-j\pi(2\beta_{1,g}+4\beta_{3,g})} & \cdots & e^{-j\pi((N_x-1)\beta_{1,g}+(N_x-1)^2\beta_{3,g})} \\ e^{-j\pi(\beta_{2,g}+\beta_{4,g})} & e^{-j\pi(\beta_{1,g}+\beta_{2,g}+\beta_{3,g}+\beta_{4,g}+\beta_{5,g})} & e^{-j\pi(2\beta_{1,g}+\beta_{2,g}+4\beta_{3,g}+\beta_{4,g}+2\beta_{5,g})} & \cdots & e^{-j\pi(\beta_{1,g}+(N_x-1)\beta_{2,g}+\beta_{3,g}+(N_x-1)^2\beta_{4,g}+(N_x-1)\beta_{5,g})} \\ e^{-j\pi(2\beta_{2,g}+4\beta_{4,g})} & e^{-j\pi(\beta_{1,g}+2\beta_{2,g}+\beta_{3,g}+4\beta_{4,g}+2\beta_{5,g})} & e^{-j\pi(2\beta_{1,g}+2\beta_{2,g}+4\beta_{3,g}+4\beta_{4,g}+4\beta_{5,g})} & \cdots & e^{-j\pi((N_x-1)\beta_{1,g}+2\beta_{2,g}+(N_x-1)^2\beta_{3,g}+4\beta_{4,g}+2(N_x-1)\beta_{5,g})} \\ \vdots & \vdots & \vdots & \ddots & \vdots \\ e^{-j\pi((N_y-1)\beta_{2,g}+(N_y-1)^2\beta_{4,g})} & e^{-j\pi(\beta_{1,g}+(N_y-1)\beta_{2,g}+\beta_{3,g}+(N_y-1)^2\beta_{4,g}+(N_y-1)\beta_{5,g})} & e^{-j\pi(2\beta_{1,g}+(N_y-1)\beta_{2,g}+4\beta_{3,g}+(N_y-1)^2\beta_{4,g}+2(N_y-1)\beta_{5,g})} & \cdots & e^{-j\pi((N_x-1)\beta_{1,g}+(N_y-1)\beta_{2,g}+(N_x-1)^2\beta_{3,g}+(N_y-1)^2\beta_{4,g}+(N_x-1)(N_y-1)\beta_{5,g})} \end{bmatrix}$$

S504: the terminal obtains a target codeword according to the channel information and the codebook.

In this example, the terminal selects, according to a $N_r \times N_t$ dimensional channel matrix, a codeword best matching a channel from the codebook as a target codeword, wherein the selection manner of the target codeword is not limited.

S505: the terminal determines codeword generation parameters according to the target codeword and feeds back the codeword generation parameters to the base station, wherein the codeword generation parameters $t_{1,g}$, $t_{2,g}$ and $t_{3,g}$ are indicated by a PMI.

S506: the base station receives the codeword generation parameters fed back by the terminal.

S507: the base station generates a codeword according to a preset codeword generation model.

In this example, without the need of creating a codebook, the base station stores all relevant parameters of a codeword generation model in advance, and after receiving codeword generation parameters fed back by the terminal, calculates and obtains a codeword that best matches a channel, thereby reducing the storage space occupied by the codebook.

S508: the base station acquires channel information according to the codeword generation parameters and the codeword.

Example 6

Example 6 provides a method for a base station and a terminal to perform channel information feedback and channel information acquisition by means of a novel codeword generation model, which at least includes:
S601: a base station sends a pilot frequency signal for channel measurement.

It should be noted that before the base station performs step S601, it includes but is not limited to configuring the UPA and the antennas. In this example, the number of antennas in the horizontal direction and the number of antennas in the perpendicular direction are $N_x$ and $N_y$ respectively. The base station sends a set of Channel State Information-Reference Signal (CSI-RS) pilots of $N_t = N_x N_y$ ports in total for channel measurement.

S602: the terminal receives a pilot signal sent by the base station, and performs channel measurement to obtain channel information.

It should be noted that, before the terminal performs S602, it includes but is not limited to configuring antennas. In this example, the number of antennas is $N_r$. The terminal receives pilot configuration information sent by the base station, performs detection on a corresponding resource position, and obtains $N_r \times N_t$ dimensional channel matrix information.

S603: the terminal constructs a codebook according to a preset codeword generation model.

In this example, a codebook is constructed according to a codeword generation model, and a generated codeword unit has the following form:

$$\frac{1}{\sqrt{N_t}} e^{-j\pi(\beta_{1,g} n_x + \beta_{2,g} n_y + \beta_{3,g} n_x{}^2 + \beta_{4,g} n_y{}^2 + \beta_{5,g} n_x n_y)}$$

wherein, $n_x \in \{0,1,..., N_x - 1\}$, $n_y \in \{0,1, ..., N_y - 1\}$; $g \in \{1,2,...,G\}$, G is the size of the codeword candidate set, and the codebook is constructed by traversing the codeword candidate set, $\beta_{1,g}$, $\beta_{2,g}$, $\beta_{3,g}$, $\beta_{4,g}$, and $\beta_{5,g}$ are model coefficients of the codeword generation model, and $t_{1,g}$, $t_{2,g}$ and $t_{3,g}$ are codeword generation parameters. Further, the model coefficients $\beta_{1,g}$, $\beta_{2,g}$, $\beta_{3,g}$, $\beta_{4,g}$ and $\beta_{5,g}$ in the codebook generation model are determined according to the codeword generation parameters $t_{1,g}$, $t_{2,g}$ and $t_{3,g}$ fed back by the terminal:

$$t_{1,g} = -1 + \frac{2l_x}{O_x N_x}, l_x \in \{0,1,\ldots,O_x N_x - 1\}$$

$$t_{2,g} = -1 + \frac{2l_y}{O_y N_y}, l_y \in \{0,1,\ldots,O_y N_y - 1\}$$

$$t_{3,g} = \frac{k}{O_t N_t^2}, k \in \{0,1,\ldots,O_t N_t - 1\}$$

$$\beta_1 = t_{1,g},$$

$$\beta_2 = t_{2,g},$$

$$\beta_3 = \frac{(1 - t^2_{1,g})}{t_{3,g}},$$

$$\beta_4 = \frac{(1 - t^2_{2,g})}{t_{3,g}},$$

$$\beta_5 = \frac{-2t_{1,g}t_{2,g}}{t_{3,g}}$$

wherein, $O_x$, $O_y$ and $O_t$ are real numbers agreed in advance between the base station and the terminal, and the index combination ($I_x$, $I_y$, $k$) has a one-to-one correspondence with g. The finally generated codeword may be expressed as:

$$c_g = \frac{1}{\sqrt{N_t}}$$

$$= \begin{bmatrix} 1 & e^{-j\pi(\beta_{1,g}+\beta_{3,g})} & e^{-j\pi(2\beta_{1,g}+4\beta_{3,g})} & \ldots & e^{-j\pi((N_x-1)\beta_{1,g}+(N_x-1)^2\beta_{3,g})} \\ e^{-j\pi(\beta_{2,g}+\beta_{4,g})} & e^{-j\pi(\beta_{1,g}+\beta_{2,g}+\beta_{3,g}+\beta_{4,g}+\beta_{5,g})} & e^{-j\pi(2\beta_{1,g}+\beta_{2,g}+4\beta_{3,g}+\beta_{4,g}+2\beta_{5,g})} & \ldots & e^{-j\pi(\beta_{1,g}+(N_x-1)\beta_{2,g}+\beta_{3,g}+(N_x-1)^2\beta_{4,g}+(N_x-1)\beta_{5,g})} \\ e^{-j\pi(2\beta_{2,g}+4\beta_{4,g})} & e^{-j\pi(\beta_{1,g}+2\beta_{2,g}+\beta_{3,g}+4\beta_{4,g}+2\beta_{5,g})} & e^{-j\pi(2\beta_{1,g}+2\beta_{2,g}+4\beta_{3,g}+4\beta_{4,g}+4\beta_{5,g})} & \ldots & e^{-j\pi((N_x-1)\beta_{1,g}+2\beta_{2,g}+(N_x-1)^2\beta_{3,g}+4\beta_{4,g}+2(N_x-1)\beta_{5,g})} \\ \vdots & \vdots & \vdots & \ddots & \vdots \\ e^{-j\pi((N_y-1)\beta_{2,g}+(N_y-1)^2\beta_{4,g})} & e^{-j\pi(\beta_{1,g}+(N_y-1)\beta_{2,g}+\beta_{3,g}+(N_y-1)^2\beta_{4,g}+(N_y-1)\beta_{5,g})} & e^{-j\pi(2\beta_{1,g}+(N_y-1)\beta_{2,g}+4\beta_{3,g}+(N_y-1)^2\beta_{4,g}+2(N_y-1)\beta_{5,g})} & \ldots & e^{-j\pi((N_x-1)\beta_{1,g}+(N_y-1)\beta_{2,g}+(N_x-1)^2\beta_{3,g}+(N_y-1)^2\beta_{4,g}+(N_x-1)(N_y-1)\beta_{5,g})} \end{bmatrix}$$

S604: the terminal obtains a target codeword according to the channel information and the codebook.

In this example, the terminal selects, according to a $N_r \times N_t$ dimensional channel matrix, a codeword best matching a channel from the codebook as a target codeword, wherein the selection manner of the target codeword is not limited.

S605: the terminal determines codeword generation parameters according to the target codeword and feeds back the codeword generation parameters to the base station, wherein the codeword generation parameters $t_{1,g}$, $t_{2,g}$, $t_{3,g}$ are indicated by a PMI.

S606: the base station receives the codeword generation parameters fed back by the terminal.

S607: the base station generates a codeword according to a preset codeword generation model.

In this example, without the need of creating a codebook, the base station stores all relevant parameters of a codeword generation model in advance, and after receiving codeword generation parameters fed back by the terminal, calculates and obtains a codeword that best matches a channel, thereby reducing the storage space occupied by the codebook.

S608: the base station acquires channel information according to the codeword generation parameters and the codeword.

Example 7

Example 7 provides a method for a base station and a terminal to perform channel information feedback and channel information acquisition by means of a novel codeword generation model, which at least includes:

S701: a base station sends a pilot frequency signal for channel measurement.

It should be noted that before the base station performs step S701, it includes but is not limited to configuring the UPA and the antennas. In this example, the number of antennas in the horizontal direction and the number of antennas in the perpendicular direction are $N_x$ and $N_y$ respectively. The base station sends a set of Channel State Information-Reference Signal (CSI-RS) pilots of $N_t = N_x N_y$ ports in total for channel measurement.

S702: the terminal receives a pilot signal sent by the base station, and performs channel measurement to obtain channel information.

It should be noted that, before the terminal performs S702, it includes but is not limited to configuring antennas. In this example, the number of antennas is $N_r$. The terminal receives pilot configuration information sent by the base station, performs detection on a corresponding resource position, and obtains $N_r \times N_t$ dimensional channel matrix information.

S703: the terminal constructs a codebook according to a preset codeword generation model.

In this example, a codebook is constructed according to a codeword generation model, and a generated codeword unit has the following form:

$$\frac{1}{\sqrt{N_t}} e^{-j\pi(\beta_{1,g} n_x + \beta_{2,g} n_y + \beta_{3,g} n_x{}^2 + \beta_{4,g} n_y{}^2 + \beta_{5,g} n_x n_y)}$$

wherein, $n_x \in \{0,1,...,N_x - 1\}$, $n_y \in \{0,1,...,N, - 1\}$; $g \in \{1,2, ... , G\}$, G is the size of the codeword candidate set, and the codebook is constructed by traversing the codeword candidate set, $\beta_{1,g}$, $\beta_{2,g}$, $\beta_{3,g}$, $\beta_{4,g}$ and $\beta_{5,g}$ are model coefficients of the codeword generation model, and $t_{1,g}$, $t_{2,g}$ and $t_{3,g}$ are codeword generation parameters. Further, the model coefficients $\beta_{1,g}$, $\beta_{2,g}$, $\beta_{3,g}$, $\beta_{4,g}$ and $\beta_{5,g}$ in the codebook generation model are determined according to the codeword generation parameters $t_{1,g}$, $t_{2,g}$ and $t_{3,g}$ fed back by the terminal:

$$t_{1,g} = -\frac{\pi}{2} + \frac{\pi l_1}{O_1 N_x}, l_x \in \{0,1,\ldots,O_1 N_x - 1\}$$

$$t_{2,g} = \frac{\pi l_2}{O_2 N_y}, l_y \in \{0,1,\ldots,O_2 N_y - 1\}$$

$$t_{3,g} = \frac{l_3}{O_3 N_t{}^2}, k \in \{0,1,\ldots,O_3 N_t - 1\}$$

$$\beta_1 = \sin t_{1,g} \cos t_{2,g},$$

$$\beta_2 = \sin t_{1,g} \sin t_{2,g},$$

$$\beta_3 = (1 - \sin^2 t_{1,g} \cos^2 t_{2,g}) t_{3,g},$$

$$\beta_4 = (1 - \sin^2 t_{1,g} \sin^2 t_{2,g}) t_{3,g},$$

$$\beta_5 = -2(\sin^2 t_{1,g} \sin t_{2,g} \cos t_{2,g}) \cos t_{3,g}$$

wherein, $O_x, O_y$ and $O_t$ are real numbers agreed in advance between the base station and the terminal, and the index combination ($l_x, l_y, k$) has a one-to-one correspondence with g. The finally generated codeword may be expressed as:

$$c_g = \frac{1}{\sqrt{N_t}}$$

$$= \begin{bmatrix} 1 & e^{-j\pi(\beta_{1,g}+\beta_{3,g})} & e^{-j\pi(2\beta_{1,g}+4\beta_{3,g})} & \cdots & e^{-j\pi((N_x-1)\beta_{1,g}+(N_x-1)^2\beta_{3,g})} \\ e^{-j\pi(\beta_{2,g}+\beta_{4,g})} & e^{-j\pi(\beta_{1,g}+\beta_{2,g}+\beta_{3,g}+\beta_{4,g}+\beta_{5,g})} & e^{-j\pi(2\beta_{1,g}+\beta_{2,g}+4\beta_{3,g}+\beta_{4,g}+2\beta_{5,g})} & \cdots & e^{-j\pi(\beta_{1,g}+(N_x-1)\beta_{2,g}+\beta_{3,g}+(N_x-1)^2\beta_{4,g}+(N_x-1)\beta_{5,g})} \\ e^{-j\pi(2\beta_{2,g}+4\beta_{4,g})} & e^{-j\pi(\beta_{1,g}+2\beta_{2,g}+\beta_{3,g}+4\beta_{4,g}+2\beta_{5,g})} & e^{-j\pi(2\beta_{1,g}+2\beta_{2,g}+4\beta_{3,g}+4\beta_{4,g}+4\beta_{5,g})} & \cdots & e^{-j\pi((N_x-1)\beta_{1,g}+2\beta_{2,g}+(N_x-1)^2\beta_{3,g}+4\beta_{4,g}+2(N_x-1)\beta_{5,g})} \\ \vdots & \vdots & \vdots & \ddots & \vdots \\ e^{-j\pi((N_y-1)\beta_{2,g}+(N_y-1)^2\beta_{4,g})} & e^{-j\pi(\beta_{1,g}+(N_y-1)\beta_{2,g}+\beta_{3,g}+(N_y-1)^2\beta_{4,g}+(N_y-1)\beta_{5,g})} & e^{-j\pi(2\beta_{1,g}+(N_y-1)\beta_{2,g}+4\beta_{3,g}+(N_y-1)^2\beta_{4,g}+2(N_y-1)\beta_{5,g})} & \cdots & e^{-j\pi((N_x-1)\beta_{1,g}+(N_y-1)\beta_{2,g}+(N_x-1)^2\beta_{3,g}+(N_y-1)^2\beta_{4,g}+(N_x-1)(N_y-1)\beta_{5,g})} \end{bmatrix}$$

704: the terminal obtains a target codeword according to the channel information and the codebook.

In this example, the terminal selects, according to a $N_r \times N_t$ dimensional channel matrix, a codeword best matching a channel from the codebook as a target codeword, wherein the selection manner of the target codeword is not limited.

S705: the terminal determines codeword generation parameters according to the target codeword and feeds back the codeword generation parameters to the base station, wherein the codeword generation parameters $t_{1,g}$, $t_{2,g}$ and

$t_{3,g}$ are indicated by a PMI.

S706: the base station receives the codeword generation parameters fed back by the terminal.

S707: the base station generates a codeword according to a preset codeword generation model.

In this example, without the need of creating a codebook, the base station stores all relevant parameters of a codeword generation model in advance, and after receiving codeword generation parameters fed back by the terminal, calculates and obtains a codeword that best matches a channel, thereby reducing the storage space occupied by the codebook.

S708: the base station acquires channel information according to the codeword generation parameters and the codeword.

Example 8

Example 8 provides a method for a base station and a terminal to perform channel information feedback and channel information acquisition by means of a novel codeword generation model, which at least includes:

S801: a base station sends a pilot frequency signal for channel measurement.

It should be noted that before the base station performs step S801, it includes but is not limited to configuring the UPA and the antennas. In this example, the number of antennas in the horizontal direction and the number of antennas in the perpendicular direction are $N_x$ and $N_y$ respectively. The base station sends a set of Channel State Information-Reference Signal (CSI-RS) pilots of $N_t = N_x N_y$ ports in total for channel measurement.

S802: the terminal receives a pilot signal sent by the base station, and performs channel measurement to obtain channel information.

It should be noted that, before the terminal performs S802, it includes but is not limited to configuring antennas. In this example, the number of antennas is $N_r$. The terminal receives pilot configuration information sent by the base station, performs detection on a corresponding resource position, and obtains $N_r \times N_t$ dimensional channel matrix information.

S803: the terminal constructs a codebook according to a preset codeword generation model.

In this example, a codebook is constructed according to a codeword generation model, and a generated codeword unit has the following form:

$$\frac{1}{\sqrt{N_t}} e^{-j\pi(\beta_{1,g}n_x + \beta_{2,g}n_y + \beta_{3,g}n_x^2 + \beta_{4,g}n_y^2 + \beta_{5,g}n_x n_y)}$$

wherein, $n_x \in \{0,1,...,N_x - 1\}$, $n_y \in \{0,1,...,N_y - 1\}$; $g \in \{1,2, ... , G\}$, G is the size of the codeword candidate set, and the codebook is constructed by traversing the codeword candidate set, $\beta_{1,g}, \beta_{2,g}, \beta_{3,g}, \beta_{4,g}$ and $\beta_{5,g}$ are model coefficients of the codeword generation model, and $t_{1,g}, t_{2,g}$ and $t_{3,g}$ are codeword generation parameters. Further, the model coefficients $\beta_{1,g}, \beta_{2,g}, \beta_{3,g}, \beta_{4,g}$ and $\beta_{5,g}$ in the codebook generation model are determined according to the codeword generation parameters $t_{1,g}, t_{2,g}$ and $t_{3,g}$ fed back by the terminal:

$$t_{1,g} = -\frac{\pi}{2} + \frac{\pi l_1}{O_1 N_x}, l_x \in \{0,1,\ldots,O_1 N_x - 1\}$$

$$t_{2,g} = \frac{\pi l_2}{O_2 N_y}, l_y \in \{0,1,\ldots,O_2 N_y - 1\}$$

$$t_{3,g} = \frac{l_3}{O_3 N_t^2}, k \in \{0,1,\ldots,O_3 N_t - 1\}$$

$$\beta_1 = \sin t_{1,g} \cos t_{2,g},$$

$$\beta_2 = \sin t_{1,g} \sin t_{2,g},$$

$$\beta_3 = \frac{(1 - sin^2\, t_{1,g}\, cos^2\, t_{2,g})}{t_{3,g}},$$

$$\beta_4 = \frac{(1 - sin^2\, t_{1,g}\, sin^2\, t_{2,g})}{t_{3,g}},$$

$$\beta_5 = \frac{-2(sin^2\, t_{1,g}\, sin\, t_{2,g}\, cos\, t_{2,g})}{cos\, t_{3,g}}$$

wherein, $O_x, O_y$ and $O_t$ are real numbers agreed in advance between the base station and the terminal, and the index combination ($l_x$, $l_y$, $k$) has a one-to-one correspondence with g. The finally generated codeword may be expressed as:

$$c_g = \frac{1}{\sqrt{N_t}}$$

$$= \begin{bmatrix} 1 & e^{-j\pi(\beta_{1,g}+\beta_{3,g})} & e^{-j\pi(2\beta_{1,g}+4\beta_{3,g})} & \cdots & e^{-j\pi((N_x-1)\beta_{1,g}+(N_x-1)^2\beta_{3,g})} \\ e^{-j\pi(\beta_{2,g}+\beta_{4,g})} & e^{-j\pi(\beta_{1,g}+\beta_{2,g}+\beta_{3,g}+\beta_{4,g}+\beta_{5,g})} & e^{-j\pi(2\beta_{1,g}+\beta_{2,g}+4\beta_{3,g}+\beta_{4,g}+2\beta_{5,g})} & \cdots & e^{-j\pi((N_x-1)\beta_{1,g}+\beta_{2,g}+(N_x-1)^2\beta_{3,g}+\beta_{4,g}+(N_x-1)\beta_{5,g})} \\ e^{-j\pi(2\beta_{2,g}+4\beta_{4,g})} & e^{-j\pi(\beta_{1,g}+2\beta_{2,g}+\beta_{3,g}+4\beta_{4,g}+2\beta_{5,g})} & e^{-j\pi(2\beta_{1,g}+2\beta_{2,g}+4\beta_{3,g}+4\beta_{4,g}+4\beta_{5,g})} & \cdots & e^{-j\pi((N_x-1)\beta_{1,g}+2\beta_{2,g}+(N_x-1)^2\beta_{3,g}+4\beta_{4,g}+2(N_x-1)\beta_{5,g})} \\ \vdots & \vdots & \vdots & \ddots & \vdots \\ e^{-j\pi((N_y-1)\beta_{2,g}+(N_y-1)^2\beta_{4,g})} & e^{-j\pi(\beta_{1,g}+(N_y-1)\beta_{2,g}+\beta_{3,g}+(N_y-1)^2\beta_{4,g}+(N_y-1)\beta_{5,g})} & e^{-j\pi(2\beta_{1,g}+(N_y-1)\beta_{2,g}+4\beta_{3,g}+(N_y-1)^2\beta_{4,g}+2(N_y-1)\beta_{5,g})} & \cdots & e^{-j\pi((N_x-1)\beta_{1,g}+(N_y-1)\beta_{2,g}+(N_x-1)^2\beta_{3,g}+(N_y-1)^2\beta_{4,g}+(N_x-1)(N_y-1)\beta_{5,g})} \end{bmatrix}$$

S804: the terminal obtains a target codeword according to the channel information and the codebook.

In this example, the terminal selects, according to a $N_r \times N_t$ dimensional channel matrix, a codeword best matching a channel from the codebook as a target codeword, wherein the selection manner of the target codeword is not limited.

S805: the terminal determines codeword generation parameters according to the target codeword and feeds back the codeword generation parameters to the base station, wherein the codeword generation parameters $t_{1,g}$, $t_{2,g}$ and $t_{3,g}$ are indicated by a PMI.

S806: the base station receives the codeword generation parameters fed back by the terminal.

S807: the base station generates a codeword according to a preset codeword generation model.

In this example, without the need of creating a codebook, the base station stores all relevant parameters of a codeword generation model in advance, and after receiving codeword generation parameters fed back by the terminal, calculates and obtains a codeword that best matches a channel, thereby reducing the storage space occupied by the codebook.

S808: the base station acquires channel information according to the codeword generation parameters and the codeword.

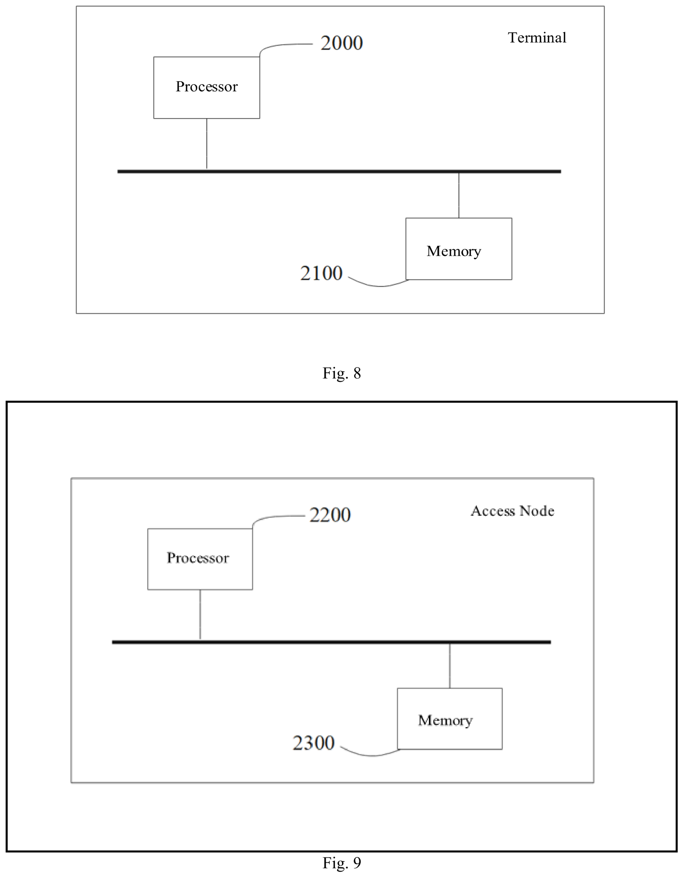

Fig. 8 is a schematic structural diagram of a terminal according to an embodiment of the present disclosure. As shown in Fig. 8, the terminal includes a processor 2000 and a memory 2100. The number of processors 2000 and the number of memories 2100 may be one or more, and in Fig. 9, one processor 2000 and one memory 2100 are taken as an example. The processor 2000 and the memory 2100 in the device may be connected by using a bus or in another manner, and connection by using a bus is used as an example in fig. 8.

Fig. 9 is a schematic structural diagram of an access node according to an embodiment of the present disclosure. As shown in Fig. 9, the access node includes a processor 2200 and a memory 2300. The number of processors 2200 and the number of memories 2300 may be one or more, and in Fig. 10, one processor 2200 and one memory 2300 are taken as an example. The processor 2200 and the memory 2300 in the device may be connected by using a bus or in another manner, and connection by using a bus is used as an example in fig. 9.

An embodiment of the present disclosure further provides a computer-readable storage medium storing computer executable instructions which are used for executing the channel information feedback method or the channel information acquisition method provided in any embodiment of the present disclosure.

An embodiment of the present disclosure provides a computer program product, comprising a computer program or computer instructions, wherein the computer program or the computer instructions are stored in a computer-readable storage medium; a processor of a computer device reads the computer program or the computer instructions from the computer-readable storage medium; the processor executes the computer program or the computer instructions, so that the computer device executes the channel information feedback method or the channel information acquisition method provided in any embodiment of the present disclosure.

The system architecture and application scenarios described in the embodiments of the present disclosure are intended to more clearly illustrate the technical solutions of the embodiments of the present disclosure, and do not limit the technical solutions provided in the embodiments of the present disclosure. Those skilled in the art would understand that, with the evolution of system architectures and the emergence of new application scenarios, the technical solutions provided by the embodiments of this disclosure are equally applicable to similar technical problems.

A person of ordinary skill in the art could understand that the functional modules/units in all or some of the operations, systems and apparatuses of the methods disclosed above can be implemented as software, firmware, hardware, and any suitable combination thereof.

In a hardware embodiment, the division of functional modules/units mentioned in the description above does not necessarily correspond to the division of physical components; for example, one physical component may have multiple functions, or one function or operation may be performed cooperatively by several physical components. Some or all of the physical components may be implemented as software executed by a processor, such as a central processing unit, a digital signal processor, or a microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to a person of ordinary skill in the art, the term "computer storage medium" includes transitory and non-transitory, removable and non-removable medium implemented in any method or technology for storing information (such as computer-readable instructions, data structures, program modules, or other data). The computer storage medium includes but is not limited to, RAM, ROM, EEPROM, flash memory or other memory technology, CD-ROM, digital versatile disk (DVD) or other optical disk storage, magnetic cassettes, magnetic tapes, magnetic disk storage or other magnetic storage apparatuses, or any other medium which can be used to store desired information and can be accessed by a computer. In addition, as is well known to a person of ordinary skill in the art, the communication medium typically includes computer-readable instructions, data structures, program modules, or other data in a modulated data signal such as a carrier or other transmission mechanisms, and may include any information delivery medium.

Terms such as "component", "module", and "system" in the present description are used to indicate computer-related entities, hardware, firmware, combinations of hardware and software, software, software being executed, or the like. For example, a component may be, but is not limited to, a process running on a processor, a processor, an object, an executable file, an executing thread, a program, and/or a computer. As shown in the figures, both an application that runs on the computing device and a computing device may be components. One or more components may reside within a process or a thread of execution, and a component is located on one computer or distributed between two or more computers. In addition, these components are executed on various computer-readable media that store various data structures. The components communicate by using a local or remote process and based on, for example, a signal having one or more data packets (for example, data from two components interacting with another component in a local system, a distributed system, or across a network such as the Internet interacting with other systems by using the signal).

Some embodiments of the present disclosure have been described above with reference to the accompanying drawings, which thus do not limit the scope of the present disclosure. Any modifications, equivalent replacements, and improvements made by those skilled in the art without departing from the scope and spirit of the present disclosure shall belong to the scope of protection of the present disclosure.

**Claims**

1. A channel information feedback method, performed by a terminal, comprising:

    performing channel measurement to obtain channel information;
    generating a codeword according to a preset codeword generation model;
    obtaining a target codeword according to the channel information and the codeword; and
    determining codeword generation parameters corresponding to the target codeword and feeding back the codeword generation parameters to an access node, wherein the codeword is used to characterize channel information.

2. The channel information feedback method according to claim 1, wherein a calculation formula corresponding to the codeword generation model is $pe^{-j\pi(\beta_1 n_x + \beta_2 n_y + \beta_3 n_x^2 + \beta_4 n_y^2 + \beta_5 n_x n_y)}$, wherein, $p$ is a scalar, $\beta_1$, $\beta_2$, $\beta_3$, $\beta_4$ and $\beta_5$ are model coefficients, and the model coefficients are real numbers; $n_x \in \{0, 1, ..., N_x - 1\}$, $n_y \in \{0, 1, ..., N_y - 1\}$, $N_x$ and $N_y$ are dimension information parameters used for codeword generation, and $N_x$ and $N_y$ are integers; and the model coefficients and the codeword generation parameters have a preset mapping relationship.

3. The channel information feedback method according to claim 2, wherein the preset mapping relationship comprises:

$$\beta_1=f_1(t_1),\ \beta_2=f_2(t_2),\ \beta_3=f_3(t_1,t_3),\ \beta_4=f_4(t_2,t_3),\ \beta_5=f_5(t_1,t_2,t_3),$$

wherein $f_i$ represents the preset mapping relationship, and $t_1$, $t_2$ and $t_3$ are the codeword generation parameters.

4. The channel information feedback method according to claim 3, wherein the preset mapping relationship comprises:

$$\beta_1=q_1 t_1,\ \beta_2=q_2 t_2,\ \beta_3=q_3(1-t_1^2)t_3,\ \beta_4=q_4(1-t_2^2)t_3,\ \beta_5=q_5 t_1 t_2 t_3,$$

wherein $q_i$ is a preset constant.

5. The channel information feedback method according to claim 3, wherein the preset mapping relationship comprises:

$$\beta_1=q_1 t_1,\ \beta_2=q_2 t_2,\ \beta_3=q_3(1-t_1^2)/t_3,\ \beta_4=q_4(1-t_2^2)/t_3,\ \beta_5=q_5 t_1 t_2/t_3,$$

wherein $q_i$ is a preset constant.

6. The channel information feedback method according to claim 2, wherein the preset mapping relationship comprises:

$$\beta_1=f_1(t_1,t_2),\ \beta_2=f_2(t_1,t_2),\ \beta_3=f_3(t_1,t_2,t_3),\ \beta_4=f_4(t_1,t_2,t_3),\ \beta_5=f_5(t_1,t_2,t_3),$$

wherein $f_i$ represents the preset mapping relationship, and $t_1$, $t_2$ and $t_3$ are the codeword generation parameters.

7. The channel information feedback method according to claim 6, wherein the preset mapping relationship comprises:
$\beta_1=q_1 \sin t_1 \cos t_2$, $\beta_2=q_2 \sin t_1 \sin t_2$, $\beta_3=q_3(1-\sin^2 t_1 \cos^2 t_2)/t_3$, $\beta_4=q_4(1-\sin^2 t_1 \sin^2 t_2)/t_3$, $\beta_5=q_5(\sin^2 t_1 \sin t_2 \cos t_2)/t_3$,
wherein $q_i$ is a preset constant.

8. The channel information feedback method according to claim 6, wherein the preset mapping relationship comprises:
$\beta_1=q_1 \sin t_1 \cos t_2$, $\beta_2=q_2 \sin t_1 \sin t_2$, $\beta_3=q_3(1-\sin^2 t_1 \cos^2 t_2)t_3$, $\beta_4=q_4(1-\sin^2 t_1 \sin^2 t_2)t_3$, $\beta_5=q_5(\sin^2 t_1 \sin t_2 \cos t_2)t_3$, wherein $q_i$ is a preset consant.

9. The channel information feedback method according to claim 2, wherein a formula for calculating the codeword generation parameters comprises:

$$\mathrm{t}_{1,g} = -1+\frac{2l_x}{O_x N_x},\ \ \mathrm{t}_{2,g} = -1+\frac{2l_y}{O_y N_y},\ \ \mathrm{t}_{3,g} = \frac{k}{O_t N_t^2},$$

wherein, $l_x \in \{0,1,...,O_x N_x -1\}$, $l_y \in \{0,1,...,O_y N_y -1\}$, $k \in \{0,1,...,O_t N_t -1\}$, $O_x$, $O_y$, $O_t$ are preset real numbers, $N_t = N_x N_y$, the index combination $(l_x, l_y, k)$ and g have a determined mapping relationship.

10. The channel information feedback method according to claim 2, wherein a formula for calculating the codeword generation parameters comprises:

$$\mathrm{t}_{1,g} = -\frac{\pi}{2}+\frac{\pi l_1}{O_1 N_x},\ \ \mathrm{t}_{2,g} = \frac{\pi l_2}{O_2 N_y},\ \ \mathrm{t}_{3,g} = \frac{l_3}{O_3 N_t^2},$$

wherein, $l_1 \in \{0,1,...,O_1 N_x -1\}$, $l_2 \in \{0,1,...,O_2 N_y -1\}$, $l_3 \in \{0,1,...,O_3 N_t -1\}$, $O_1$, $O_2$ and $O_3$ are preset real numbers, $N_t = N_x N_y$, the index combination $(l_1, l_2, l_3)$ and g have a determined mapping relationship.

11. A channel information acquisition method, performed by an access node and comprising:

generating a codeword according to a preset codeword generation model;
receiving codeword generation parameters fed back by a terminal; and
acquiring channel information according to the codeword generation parameters and the codeword.

12. The channel information acquisition method according to claim 11, wherein a calculation formula corresponding to the codeword generation model is $pe^{-j\pi(\beta_1 n_x + \beta_2 n_y + \beta_3 n_x^2 + \beta_4 n_y^2 + \beta_5 n_x n_y)}$, where p is a scalar, $\beta_1$, $\beta_2$, $\beta_3$, $\beta_4$ and $\beta_5$ are model coefficients, and the model coefficients are real numbers; $n_x \in \{0,1, ..., N_x - 1\}$, $n_y \in \{0,1, ..., N_y - 1\}$, $N_x$ and $N_y$ are dimension information parameters used for codeword generation, and $N_x$ and $N_y$ are integers; and the model coefficients and the codeword generation parameters have a preset mapping relationship.

13. The channel information acquisition method according to claim 12, wherein the preset mapping relationship comprises:

$$\beta_1 = f_1(t_1), \quad \beta_2 = f_2(t_2), \quad \beta_3 = f_3(t_1, t_3), \quad \beta_4 = f_4(t_2, t_3), \quad \beta_5 = f_5(t_1, t_2, t_3),$$

wherein $f_i$ represents the preset mapping relationship, and $t_1$, $t_2$ and $t_3$ are the codeword generation parameters.

14. The channel information acquisition method according to claim 13, wherein the preset mapping relationship comprises:

$$\beta_1 = q_1 t_1, \quad \beta_2 = q_2 t_2, \quad \beta_3 = q_3(1 - t_1^2)t_3, \quad \beta_4 = q_4(1 - t_2^2)t_3, \quad \beta_5 = q_5 t_1 t_2 t_3,$$

wherein $q_i$ is a preset constant.

15. The channel information acquisition method according to claim 13, wherein the preset mapping relationship comprises:

$$\beta_1 = q_1 t_1, \quad \beta_2 = q_2 t_2, \quad \beta_3 = q_3(1 - t_1^2)/t_3, \quad \beta_4 = q_4(1 - t_2^2)/t_3, \quad \beta_5 = q_5 t_1 t_2/t_3,$$

wherein $q_i$ is a preset constant.

16. The channel information acquisition method according to claim 12, wherein the preset mapping relationship comprises:

$$\beta_1 = f_1(t_1, t_2), \quad \beta_2 = f_2(t_1, t_2), \quad \beta_3 = f_3(t_1, t_2, t_3), \quad \beta_4 = f_4(t_1, t_2, t_3), \quad \beta_5 = f_5(t_1, t_2, t_3),$$

wherein $f_i$ represents the preset mapping relationship, and $t_1$, $t_2$ and $t_3$ are the codeword generation parameters.

17. The channel information acquisition method according to claim 16, wherein the preset mapping relationship comprises: $\beta_1 = q_1 \sin t_1 \cos t_2$, $\beta_2 = q_2 \sin t_1 \sin t_2$, $\beta_3 = q_3(1-\sin^2 t_1 \cos^2 t_2)/t_3$, $\beta_4 = q_4(1-\sin^2 t_1 \sin^2 t_2)/t_3$, $\beta_5 = q_5(\sin^2 t_1 \sin t_2 \cos t_2)/t_3$, wherein $q_i$ is a preset constant.

18. The channel information acquisition method according to claim 16, wherein the preset mapping relationship comprises:
$\beta_1 = q_1 \sin t_1 \cos t_2$, $\beta_2 = q_2 \sin t_1 \sin t_2$, $\beta_3 = q_3(1-\sin^2 t_1 \cos^2 t_2)t_3$, $\beta_4 = q_4(1-\sin^2 t_1 \sin^2 t_2)t_3$, $\beta_5 = q_5(\sin^2 t_1 \sin t_2 \cos t_2)t_3$, wherein $q_i$ is a preset constant.

19. A terminal, comprising:

   at least one processor; and
   at least one memory storing at least one program; wherein the at least one program, when executed by the at least one processor, implements the channel information feedback method according to any one of claims 1 to 10.

20. An access node, comprising:

   at least one processor; and
   at least one memory storing at least one program; wherein the at least one program, when executed by the at least one processor, implements the channel information acquisition method according to any one of claims 11 to 18.

21. A computer-readable storage medium storing a processor-executable program, wherein the processor-executable program, when executed by a processor, implements the channel information feedback method according to any one of claims 1 to 10 or the channel information acquisition method according to any one of claims 11 to 18.

22. A computer program product, comprising a computer program or computer instructions, wherein the computer program or the computer instructions are stored in a computer-readable storage medium; wherein the computer program or the computer instructions, when read and executed by a processor of a computer device from the computer-readable storage medium, cause the computer device to perform the channel information feedback method according to any one of claims 1 to 10, or the channel information acquisition method according to any one of claims 11 to 18.

Perform channel measurement to obtain channel information — S100

Generate a codeword according to a preset codeword generation model — S200

Obtain a target codeword according to the channel information and the codeword — S300

Determine codeword generation parameters corresponding to the target codeword, and feed back the codeword generation parameters — S400

Fig. 1

Generate a codeword according to a preset codeword generation model — S500

Receive the codeword generation parameters — S600

Acquire channel information according to the codeword generation parameters and the codeword — S700

Fig. 2

— S800

Receive the codeword generation parameters

— S900

Generate a codeword according to a preset codeword generation model

— S1000

Acquire channel information according to the codeword generation parameters and the codeword

Fig. 3

S101: A base station sends a pilot signal

S102: The terminal receives the pilot signal, and performs channel measurement to obtain channel information

S103: The base station constructs a codebook according to the preset codeword generation model

S103: The terminal constructs a codebook according to the presetcodeword generation model

S104: The terminal obtains a target codeword according to the channel information and the codebook

S106: The base station receives the codeword generation parameters

S105: The terminal determines codeword generation parameters according to the target codeword

S107: The base station acquires channel information according to the codebook and the codeword generation parameters

Fig. 4

S103: The base station constructs a codebook according to the presetcodeword generation model

S101: A base station sends a pilot signal

S103: The terminal constructs a codebook according to the presetcodeword generation model

S102: The terminal receives the pilot signal, and performs channel measurement to obtain channel information

S104: The terminal obtains a target codeword according to the channel information and the codebook

S106: The base station receives the codeword generation parameters

S105: The terminal determines codeword generation parameters according to the target codeword

S107: The base station acquires channel information according to the codebook and the codeword generation parameters

Fig. 5

S501: A base station sends a pilot signal → S502: The terminal receives the pilot signal, and performs channel measurement to obtain channel information

S503: The terminal constructs a codebook according to a preset codeword generation model

S504: The terminal obtains a target codeword according to the channel information and the codebook

S506: The base station receives the codeword generation parameters ← S505: The terminal determines codeword generation parameters according to the target codeword

S507: The base station generates a codeword according to a preset codeword generation model

S508: The base station acquires channel information according to the codeword generation parameters and the codeword

Fig. 6

S503: The terminal constructs a codebook according to a preset codeword generation model

S501: A base station sends a pilot signal

S502: The terminal receives the pilot signal, and performs channel measurement to obtain channel information

S504: The terminal obtains a target codeword according to the channel information and the codebook

S506: The base station receives the codeword generation parameters

S505: The terminal determines codeword generation parameters according to the target codeword

S507: The base station generates a codeword according to a preset codeword generation model

S508: The base station acquires channel information according to the codeword generation parameters and the codeword

Fig. 7

Fig. 8

Fig. 9

## INTERNATIONAL SEARCH REPORT

| International application No. |
| --- |
| **PCT/CN2023/137909** |

### A. CLASSIFICATION OF SUBJECT MATTER

H04B 7/06(2006.01)i

According to International Patent Classification (IPC) or to both national classification and IPC

### B. FIELDS SEARCHED

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

DWPI, ENTXT, CNTXT, CJFD, 3GPP: 信道, 反馈, 码字, 模型, 系数, 参数, channel, feedback, codeword, model, coefficient, parameter

### C. DOCUMENTS CONSIDERED TO BE RELEVANT

| Category* | Citation of document, with indication, where appropriate, of the relevant passages | Relevant to claim No. |
| --- | --- | --- |
| A | CN 104202276 A (ZTE CORP.) 10 December 2014 (2014-12-10) description, paragraphs 0095-0289 | 1-22 |
| A | CN 101631004 A (ZTE CORP.) 20 January 2010 (2010-01-20) entire document | 1-22 |
| A | WO 2020220278 A1 (HUAWEI TECHNOLOGIES CO., LTD.) 05 November 2020 (2020-11-05) entire document | 1-22 |
| A | ALCATEL-LUCENT SHANGHAI BELL et al. "Discussion of two-stage feedback proposals" *3GPP TSG RAN WG1 Meeting #61bis R1-104088*, 02 July 2010 (2010-07-02), entire document | 1-22 |
| A | US 2022385343 A1 (HUAWEI TECHNOLOGIES CO., LTD.) 01 December 2022 (2022-12-01) entire document | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **26 February 2024** | **01 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/137909**

| Patent document cited in search report | | | Publication date (day/month/year) | Patent family member(s) | | | Publication date (day/month/year) |
|---|---|---|---|---|---|---|---|
| CN | 104202276 | A | 10 December 2014 | US | 2017272133 | A1 | 21 September 2017 |
| | | | | WO | 2016008330 | A1 | 21 January 2016 |
| | | | | EP | 3171560 | A1 | 24 May 2017 |
| | | | | ES | 2804127 | T3 | 03 February 2021 |
| CN | 101631004 | A | 20 January 2010 | RU | 2475982 | C1 | 20 February 2013 |
| | | | | US | 2012134434 | A1 | 31 May 2012 |
| | | | | BR | 112012002928 | A2 | 24 October 2017 |
| | | | | JP | 2013502111 | A | 17 January 2013 |
| | | | | WO | 2011017991 | A1 | 17 February 2011 |
| | | | | EP | 2466835 | A1 | 20 June 2012 |
| | | | | MX | 2012001788 | A | 29 February 2012 |
| | | | | KR | 20120045045 | A | 08 May 2012 |
| WO | 2020220278 | A1 | 05 November 2020 | CN | 113748614 | A | 03 December 2021 |
| US | 2022385343 | A1 | 01 December 2022 | WO | 2021155610 | A1 | 12 August 2021 |
| | | | | EP | 4092919 | A1 | 23 November 2022 |
| | | | | CN | 115053465 | A | 13 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023101363694